(19) Europäisches Patentamt
European Patent Office
Office européen des brevets

(11) **EP 4 542 493 A1**

(12) **EUROPEAN PATENT APPLICATION**
published in accordance with Art. 153(4) EPC

(43) Date of publication:
**23.04.2025 Bulletin 2025/17**

(21) Application number: **23822679.9**

(22) Date of filing: **01.03.2023**

(51) International Patent Classification (IPC):
***G06T 9/00*** *(2006.01)*

(52) Cooperative Patent Classification (CPC):
**G06T 9/40; G06T 9/001;** G06T 2219/012

(86) International application number:
**PCT/CN2023/079140**

(87) International publication number:
**WO 2023/241107 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.06.2022 CN 202210717592**

(71) Applicant: **Tencent Technology (Shenzhen)
Company Limited
Shenzhen, Guangdong 518057 (CN)**

(72) Inventor: **ZHU, Wenjie
Shenzhen, Guangdong 518057 (CN)**

(74) Representative: **EP&C
P.O. Box 3241
2280 GE Rijswijk (NL)**

(54) **POINT CLOUD PROCESSING METHOD AND APPARATUS, COMPUTER DEVICE AND STORAGE MEDIUM**

(57) A point cloud processing method and apparatus, a computer device and a storage medium, relating to the technical field of computers. The method comprises: acquiring (S601) encoded data of a point cloud; on the basis of the encoded data, determining (S602) an en-coding mode of a point to be decoded in the point cloud in K directions, K being a positive integer; and decoding the point on the basis of the determined encoding mode (S603).

```
                  ┌─────────────────────────────────────────────┐
                  │   Obtain coding data of a point cloud        │──── S601
                  └─────────────────────────────────────────────┘
                                        │
                                        ▼
    ┌───────────────────────────────────────────────────────────────┐
    │ Determine coding modes of a to-be-decoded point in the point   │──── S602
    │         cloud in K directions based on the coding data          │
    └───────────────────────────────────────────────────────────────┘
                                        │
                                        ▼
    ┌───────────────────────────────────────────────────────────────┐
    │ Decode the to-be-decoded point based on the determined coding   │──── S603
    │                          modes                                  │
    └───────────────────────────────────────────────────────────────┘
```

FIG. 7

EP 4 542 493 A1

**Description**

RELATED APPLICATION

This application claims priority to Chinese Patent Application No. 202210717592.3, filed on June 18, 2022 and entitled "POINT CLOUD PROCESSING METHOD AND APPARATUS, COMPUTER DEVICE, AND STORAGE MEDIUM", which is incorporated herein by reference in its entirety.

FIELD

This application relates to the field of computer technologies, in particular to the field of coding and decoding technologies, and specifically to a point cloud processing method, a point cloud processing apparatus, a computer device, and a storage medium.

BACKGROUND

With the continuous development of science and technology, currently, a large number of high-precision point clouds can be obtained at a low cost within a short period of time. The point cloud includes a plurality of points, each point of the point cloud has geometry information and attribute information. To improve transmission efficiency of the point cloud, the point cloud usually may be coded before transmission.

SUMMARY

Embodiments of this application provide a point cloud processing method and apparatus, a computer device, and a storage medium.

According to an aspect, some embodiments of this application provide a point cloud processing method. The point cloud processing method includes: obtaining coding data of a point cloud; determining coding modes of a to-be-decoded point in the point cloud in K directions based on the coding data, K being a positive integer; and decoding the to-be-decoded point based on the determined coding modes.

According to another aspect, some embodiments of this application provide a point cloud processing method. The point cloud processing method includes: setting coding data of a point cloud; determining coding modes of a to-be-coded point in the point cloud in K directions based on the coding data, K being a positive integer; and coding the to-be-coded point based on the determined coding modes.

According to another aspect, some embodiments of this application provide a point cloud processing apparatus. The point cloud processing apparatus includes: an obtaining unit, configured to obtain coding data of a point cloud; and a processing unit, configured to determine coding modes of a to-be-decoded point in the point cloud in K directions based on the coding data, K being a positive integer; and decode the to-be-decoded point based on the determined coding modes.

According to another aspect, some embodiments of this application provide a point cloud processing apparatus. The point cloud processing apparatus includes: a setting unit, configured to set coding data of a point cloud; and a processing unit, configured to determine coding modes of a to-be-coded point in the point cloud in K directions based on the coding data, K being a positive integer; and code the to-be-coded point based on the determined coding modes.

According to another aspect, some embodiments of this application provide a computer device. The computer device includes a processor and a computer-readable storage medium. The processor is configured to implement a computer program. The computer-readable storage medium has the computer program stored therein, the computer program being loaded and executed by the processor to implement the point cloud processing method.

According to another aspect, some embodiments of this application provide a computer-readable storage medium. The computer-readable storage medium has a computer program stored therein, the computer program, when being read and executed by a processor of a computer device, causing the computer device to perform the point cloud processing method.

According to another aspect, some embodiments of this application provide a computer program product or a computer program. The computer program product or the computer program includes a computer instruction, the computer instruction being stored in a computer-readable storage medium. A processor of a computer device reads the computer instruction from the computer-readable storage medium, and the processor executes the computer instruction, to cause the computer device to perform the point cloud processing method.

BRIEF DESCRIPTION OF THE DRAWINGS

FIG. 1 is a schematic flowchart of point cloud compression (PCC) according to an embodiment of this application.

FIG. 2 is a diagram of a bounding box according to an embodiment of this application.

FIG. 3 is a diagram of octree coding according to an embodiment of this application.

FIG. 4 is a diagram of a prediction tree coding structure according to an embodiment of this application.

FIG. 5 is a diagram of another prediction tree coding structure according to an embodiment of this application.

FIG. 6 is a diagram of a structure of a point cloud processing system according to an embodiment of this application.

FIG. 7 is a schematic flowchart of a point cloud processing method according to an embodiment of this application.

FIG. 8 is a schematic flowchart of another point cloud processing method according to an embodiment of this application.

FIG. 9 is a diagram of a feasible sign determining process according to an embodiment of this application.

FIG. 10 is a diagram of a structure of a point cloud processing apparatus according to an embodiment of this application.

FIG. 11 is a diagram of a structure of another point cloud processing apparatus according to an embodiment of this application.

FIG. 12 is a diagram of a structure of a computer device according to an embodiment of this application.

DESCRIPTION OF EMBODIMENTS

The following clearly and completely describes the technical solutions in the embodiments of this application with reference to the accompanying drawings in the embodiments of this application. It is clear that the described embodiments are merely some but not all of the embodiments of this application. All other embodiments obtained by persons of ordinary skill in the art based on the embodiments of this application without making creative efforts shall fall within the protection scope of this application.

To improve transmission efficiency of a point cloud, the point cloud may be coded before transmission. A coder side codes geometry information and attribute information of each point in the point cloud, and then transmits a coded point cloud to a decoder side. The decoder side decodes the coded point cloud to reconstruct the geometry information and the attribute information of each point in the point cloud.

It has been found in practice that the point cloud is characterized in non-uniform spatial distribution, so that geometric residuals of points in the point cloud are large, which results in inefficient geometry coding and decoding of the point cloud.

For ease of understanding of the technical solutions described in the embodiments of this application, basic concepts in the embodiments of this application are first described herein.

(1) Point cloud. The point cloud is a set of randomly distributed discrete points in space that represent a spatial structure and a surface attribute of a three-dimensional object or a three-dimensional scene. Point clouds are classified into different categories according to different classification criteria, for example, classified into a dense point cloud and a sparse point cloud according to obtaining manners of the point clouds, or for another example, classified into a static point cloud and a dynamic point cloud according to timing types of the point clouds.

(2) Point cloud data. Geometry information and attribute information of each point in a point cloud jointly constitute the point cloud data. The geometry information is also referred to as three-dimensional position information. Geometry information of a point in the point cloud is spatial coordinates (x, y, z) of the point, including coordinate values of the point in directions of coordinate axes of a three-dimensional coordinate system, for example, a coordinate value x in an X-axis direction, a coordinate value y in a Y-axis direction, and a coordinate value z in a Z-axis direction. Attribute information of a point in the point cloud includes at least one of color information, material information, and laser reflection intensity information (also referred to as reflectivity). Generally, each point in the point cloud has the same number of types of attribute information. For example, each point in the point cloud has two types of attribute information, for example, color information and laser reflection intensity. For another example, each point in the point cloud has three types of attribute information, for example, color information, material information, and laser reflection intensity information.

(3) PCC. PCC is a process of coding geometry information and attribute information of each point in a point cloud to obtain a compressed bitstream. PCC includes two main processes, namely, geometry information coding and attribute information coding. For different types of point clouds, current mainstream PCC technologies are classified into PCC based on geometry and PCC based on projection. Herein, geometry-based PCC (G-PCC) in a moving picture expert group (MPEG) standard and a PCC standard in an audio video coding standard (AVS) (AVS-PCC) are used as examples for description.

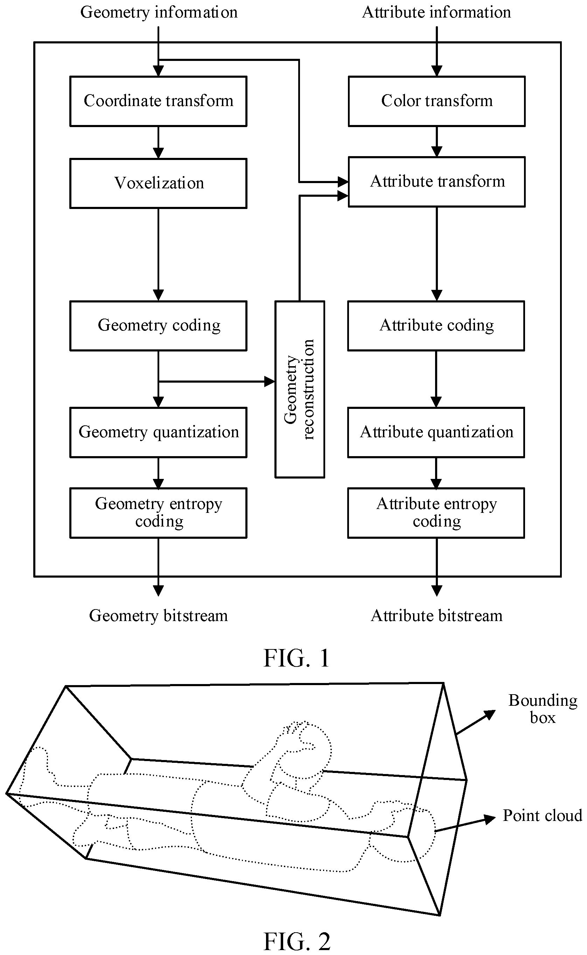

Coding frameworks of G-PCC and AVS-PCC are roughly the same, including a geometry information coding process and an attribute information coding process, as shown in FIG. 1. In the geometry information coding process, the geometry information of each point in the point cloud is coded to obtain a geometry bitstream. In the attribute information coding process, the attribute information of each point in the point cloud is coded to obtain an attribute bitstream. The geometry bitstream and the attribute bitstream jointly constitute the compressed bitstream of the point cloud.

For the geometry information coding process, main operations and processing are described as follows:

① Preprocessing: including coordinate transform and voxelization. Through scaling and translation operations, point cloud data in a three-dimensional space is converted to an integer form, and its minimum geometric position is moved to an origin of coordinates.

② Geometry coding: including two modes, for example, octree-based geometry coding and trisoup-based geometry coding, which are used under different conditions.

Octree-based geometry coding: An octree is a tree-shaped data structure. A preset bounding box is uniformly divided during three-dimensional space division, each node having eight child nodes. Whether each child node of the octree is occupied is indicated by using "1" and "0", to obtain occupancy code information as the bitstream of the geometry information of the point cloud.

Trisoup-based geometry coding: The point cloud is divided into blocks of a specific size, intersections of a surface of the point cloud at edges of the blocks are positioned, and triangles are constructed. The geometry information is compressed by coding intersection positions.

③ Geometry quantization: Fineness of the quantization is usually determined by a quantization parameter (QP). A larger value of the QP indicates that coefficients within a larger value range are quantized to the same output, which usually results in more distortion and a lower code rate. Conversely, a smaller value of the QP indicates that coefficients within a smaller value range are quantized to the same output, which usually results in less distortion and a higher code rate.

④ Geometry entropy coding: Statistical compression coding is performed on the occupancy code information of the octree, and finally, a binary (0 or 1) compressed bitstream is outputted. Statistical coding is a lossless coding mode, which can effectively reduce a code rate to represent the same signal. A common statistical coding mode is content adaptive binary arithmetic coding (CABAC).

For the attribute information coding process, main operations and processing are described as follows:

① Attribute recoloring: For lossy coding, after coding the geometry information, the coder side may decode and reconstruct the geometry information, for example, restore the geometry information of each point in the point cloud, and search the original point cloud for attribute information of one or more neighboring points as attribute information of a reconstructed point.

② Attribute transform coding: including three modes, for example, predicting transform coding, lifting transform coding, and region adaptive hierarchical transform (RAHT) coding, which are used under different conditions.

Predicting transform coding: A subset of points are selected according to distances, and the point cloud is divided into a plurality of different levels of detail (LoDs), to implement coarse-to-fine point cloud representation. Bottom-up prediction is implemented between LoD neighbors. Attribute information of a point introduced into a fine LoD is predicted from a neighboring point at a coarse LoD, to obtain a residual signal. A point at a bottommost LoD is coded as reference information.

Lifting transform coding: A weight update policy of a neighborhood point is introduced based on LoD neighbor prediction, to finally obtain a predicted attribute value of each point, and obtain a residual signal.

RAHT coding: The attribute information is subjected to RAHT to convert a signal to a transform domain, referred to as a transform coefficient.

③ Attribute quantization: Fineness of the quantization is usually determined by a QP. In predicting transform coding and lifting transform coding, entropy coding is performed on a quantized residual value. In RAHT coding, entropy coding is performed on a quantized transform coefficient.

④ Attribute entropy coding: For a quantized attribute residual signal or transform coefficient, run length coding and arithmetic coding are usually used for final compression. For a corresponding coding mode, information such as a QP is also coded by using an entropy coder.

(4) Point cloud decoding. Point cloud decoding is a process of decoding a compressed bitstream obtained by coding a point cloud to reconstruct the point cloud, and is a process of reconstructing geometry information and attribute information of each point in the point cloud based on a geometry bitstream and an attribute bitstream in the compressed bitstream. After obtaining the compressed bitstream, for the geometry bitstream, the decoder side first performs entropy decoding to obtain quantized geometry information of each point in the point cloud, and then performs inverse quantization to reconstruct the geometry information of each point in the point cloud. For the attribute bitstream, entropy decoding is first performed to obtain quantized prediction residual information or a quantized transform coefficient of each point in the point cloud. Then, inverse quantization is performed on the quantized prediction residual information to obtain reconstructed residual information, or inverse quantization is performed on the quantized transform coefficient to obtain a reconstructed transform coefficient, and inverse transform is performed on the reconstructed transform coefficient to obtain reconstructed residual information. The attribute information of each point in the point cloud is reconstructed based on the reconstructed residual information of each point in the point cloud. Reconstructed attribute information of each point in the point cloud is sequentially put in one-to-one correspondence with reconstructed geometry information to reconstruct the point cloud.

The basic concepts in some embodiments of this application are described above, and basic technologies in some embodiments of this application are described below.

(1) Preprocessing:

Floating point type coordinates of each point in an input point cloud are represented as $(x^m, y^m, z^m)$, m=0, ..., M-1, M being the number of points in the point cloud. A coordinate point $(x^{min}, y^{min}, z^{min})$ and a coordinate point $(x^{max}, y^{max}, z^{max})$ are represented as follows:

$$x^{\min} = \min\left(x^0, x^1, ..., x^{M-1}\right)$$

$$y^{\min} = \min\left(y^0, y^1, ..., y^{M-1}\right)$$

$$z^{\min} = \min\left(z^0, z^1, ..., z^{M-1}\right)$$

$$x^{\max} = \max\left(x^0, x^1, ..., x^{M-1}\right)$$

$$y^{\max} = \max\left(y^0, y^1, ..., y^{M-1}\right)$$

$$z^{\max} = \max\left(z^0, z^1, ..., z^{M-1}\right)$$

where the function $\min(s^0, s^1, ..., s^{M-1})$ represents taking a minimum value of the current input, and $\max(s^0, s^1, ..., s^{M-1})$ represents taking a maximum value of the current input.

As shown in FIG. 2, a bounding box represents a largest cuboid that can contain all the points in the input point cloud. Origin coordinates $(x^{origin}, y^{origin}, z^{origin})$ of the bounding box are calculated according to the following formulas:

$$x^{\text{origin}} = int\left(\text{floor}\left(x^{\min}\right)\right)$$

$$y^{\text{origin}} = int\left(\text{floor}\left(y^{\min}\right)\right)$$

$$z^{\text{origin}} = int\left(\text{floor}\left(z^{\min}\right)\right)$$

and

sizes of the bounding box in an x-direction, a y-direction, and a z-direction are calculated according to the following formulas:

$$BoudingBoxSize_x = int\left(x^{\max} - x^{\text{origin}}\right) + 1$$

$$BoudingBoxSize_y = int\left(y^{\max} - y^{\mathrm{origin}}\right) + 1$$

$$BoudingBoxSize_z = int\left(z^{\max} - z^{\mathrm{origin}}\right) + 1$$

where int(s) is a rounding function, and the function floor(s) returns a largest integer value less than or equal to s.

(2) Octree coding:

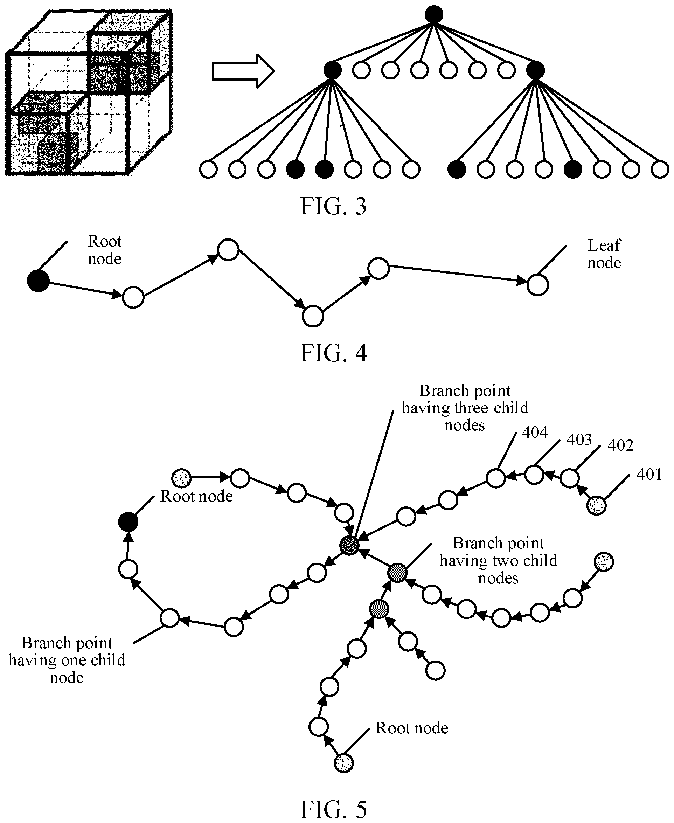

An octree is a tree-shaped data structure. Currently, the octree is mainly used to divide a point cloud in G-PCC or AVS-PCC. For point cloud data in a three-dimensional space, octree division is uniformly dividing a preset bounding box level by level, each node having eight child nodes. Whether each child node of the octree is occupied is indicated by using "1" and "0", as shown in FIG. 3, to obtain occupancy code information as a bitstream of geometry information of the point cloud.

The octree is constructed based on a Morton order. Three-dimensional coordinate information of the point cloud data is converted into a Morton code by querying a Morton order table. Nodes of each level of octree are obtained according to sorting of each Morton code. A current mainstream PCC technology is to represent point cloud data by using octree partition, and perform different processing procedures for geometry information and attribute information.

(3) Traveling salesman problem (TSP):

The TSP is a typical combinatorial optimization problem. The typical TSP is described as follows: how to select a travel route to minimize a total journey if a merchandise salesman is going to several cities to market merchandise and the merchandise salesman may travel through all the cities after starting from a city and then returns to the place of departure. From a perspective of a graph theory, the problem is essentially finding a loop with a least weight in a weighted undirected graph. Because a feasible solution to the problem is a full permutation of all vertices, as the number of vertices increases, a combinatorial explosion occurs, which is a nondeterministic polynomial (NP) complete problem. The problem has been researched a lot by domestic and foreign scholars due to its widespread use in fields such as transportation, circuit line design of circuit boards, and logistics distribution. Early researchers resolve the problem by using precise algorithms. Common methods for resolving the TSP include a branch delimitation method, a linear programming method, a dynamic programming method, and the like. However, as the problem increases in scale, the precise algorithms become incompetent. Therefore, in later research, domestic and foreign scholars focus on use of approximation algorithms or heuristic algorithms, mainly including a genetic algorithm, a simulated annealing method, an ant colony algorithm, a contraindication search algorithm, a greedy algorithm, a neural network algorithm, and the like.

For example, if the TSP is modeled by using a weighted undirected graph, the cities are vertices of the graph, roads are edges of the graph, and lengths of the roads are lengths of the edges. the problem is a minimization problem where both start and end points are a specific vertex, and each vertex is visited exactly once. Usually, the model is a complete graph (for example, each pair of vertices are connected by one edge). If there is no path between two cities, adding a long edge can complete the graph without affecting computation of an optimal loop.

In a symmetric TSP, back and forth distances between two cities are equal, leading to an undirected graph. The symmetry reduces the number of solutions by half. In an asymmetric TSP, a bidirectional path may not exist, or back and forth distances are different, leading to a directed graph. A traffic accident, a one-way road, and differences in ticket prices for departures and arrivals of cities are examples breaking the symmetry.

(4) Predictive coding technology:

A prediction relationship between signals is generated by using the TSP. All the points in the point cloud are connected into a single prediction tree, each point being predicted based on a signal value of its previous point. The method, as an option for point cloud signal prediction, is configured to act on whole original point cloud data, which can also act on a child node of the octree or a point cloud data subset obtained in another manner.

In addition, in a predictive coding technology in G-PCC, inter-point distance search is used to build a prediction tree. FIG. 4 shows a prediction tree coding structure in the AVS. The prediction tree shown in FIG. 4 is a single-chain prediction tree. FIG. 5 shows a prediction tree coding structure in the MPEG. The prediction tree shown in FIG. 5 is a multi-chain prediction tree. Each point is connected to another point and indicates the number of points connected to the point and one of four prediction modes. The four prediction modes are as follows:

1) No prediction.

2) Prediction using a parent point (a first-generation parent node), for example, a previous point. For example, for a point 401 in FIG. 5, a point 402 is its parent point.

3) Prediction using a parent point (a first-generation parent node) and a grandparent point (a second-generation parent node). For example, for a point 401 in FIG. 5, a point 402 is its parent point, and a point 403 is its grandparent point.

4) Prediction using a parent point (a first-generation parent node), a grandparent point (a second-generation parent node), and a grand-grandparent point (a third-generation parent node). For example, for a point 401 in FIG. 5, a point 402 is its parent point, a point 403 is its grandparent point, and a point 404 is its grand-grandparent point.

(5) Entropy coding technology:

The entropy coding technology is configured for binarizing and processing a quantized (in a lossy case) signed prediction residual or transform coefficient.

1) Variable-length coding: Codewords of different lengths are used to represent residuals or coefficients that may be coded. A code length may be designed according to an occurrence probability of a sign. Common methods include exponential-Golomb coding (exp-Golomb) and arithmetic coding.

2) CABAC: including the following several operations:

① Binarization: CABAC uses binary arithmetic coding, which means that two digits (1 or 0) are coded. A non-binary numerical sign, such as a transform coefficient or a motion vector, is first binarized or converted into a binary codeword before arithmetic coding. This process is similar to converting a value into a variable-length codeword, but the binary codeword is further coded by an arithmetic coder before transmitted.

② Context model selection: A context model is a probability model, and the model is a model selected based on statistics of recently coded data signs. This model stores a probability of each "bin" being 1 or 0.

③ Arithmetic coding: The arithmetic coder codes each "bin" according to the selected probability model.

④ Probability update: The selected context model is updated based on an actual coded value. For example, if a value of a "bin" is 1, a frequency count of 1 is increased.

Based on related descriptions of the basic concepts and the basic technologies, some embodiments of this application provide a point cloud processing solution for improving geometry coding and decoding efficiency of a point cloud. In a point cloud coding stage of the point cloud processing solution, when a to-be-coded point in the point cloud may be coded, coding data is set, a coding mode of the to-be-coded point in each direction is determined based on the coding data, and the to-be-coded point is coded based on the determined coding mode. In the point cloud coding stage, a proper coding mode is determined for each direction of the to-be-coded point for coding by using the coding data, so that geometry coding efficiency of the point cloud can be improved. In a point cloud decoding stage of the point cloud processing solution, when a to-be-decoded point in the point cloud may be decoded, coding data is obtained, a coding mode of the to-be-decoded point in each direction is determined based on the coding data, and the to-be-decoded point is decoded based on the determined coding mode. In the point cloud decoding stage, a proper coding mode is determined for each direction of the to-be-decoded point for decoding by using the coding data, so that geometry decoding efficiency of the point cloud can be improved.

The point cloud processing solution provided in the embodiments of this application may be further combined with technologies such as cloud computing and cloud storage in cloud technologies. Cloud computing is a computing mode, which distributes computing tasks in a resource pool including a large number of computers, so that various application systems can obtain computing power, storage spaces, and information services as required. Cloud computing provides powerful computing support for the point cloud coding stage and the point cloud decoding stage, to greatly improve geometry coding efficiency and geometry decoding efficiency of a point cloud. Cloud storage is a new concept extended and developed on the concept of cloud computing. A distributed cloud storage system (referred to as a storage system for short below) is a storage system in which a large number of different types of storage devices (which may also be referred to as storage nodes) in a network are integrated through application software or an application interface by using functions such as a cluster application, a grid technology, and a distributed storage file system, and cooperate to jointly provide data storage and service access functions to the outside. Cloud storage provides powerful storage support for the point cloud coding stage and the point cloud decoding stage, which can further improve the geometry coding efficiency and the geometry decoding efficiency of the point cloud.

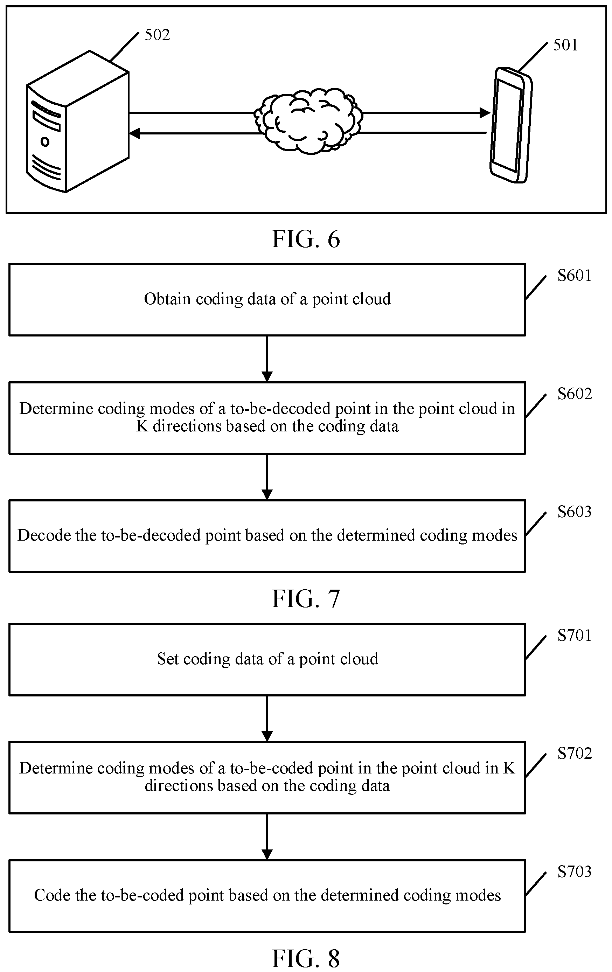

A point cloud processing system adapted to implement the point cloud processing solution provided in the embodiments of this application is described below with reference to FIG. 6. As shown in FIG. 6, the point cloud processing system includes a coding device 501 and a decoding device 502. The coding device 501 is a terminal or a server, the decoding device 502 is a terminal or a server, and a direct or indirect communication connection is established between the coding device 501 and the decoding device 502 through wired communication or wireless communication. The terminal includes but is not limited to a smartphone, a tablet computer, a notebook computer, a desktop computer, a smart voice interaction device, a smart watch, a vehicle-mounted terminal, a smart home appliance, an aircraft, or the like. The server includes an independent physical server, a server cluster or a distributed system including a plurality of physical servers, or a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform.

(1) Coding device 501:

The coding device 501 obtains point cloud data (for example, geometry information and attribute information of each point in a point cloud). The point cloud data is obtained through scene capture or in a device-generated manner. Obtaining point cloud data through scene capture is obtaining point cloud data by capturing a visual scene of the real world by using a capture device associated with the coding device 501. The capture device is configured to provide a point cloud data obtaining service for the coding device 501. The capture device includes but is not limited to any one of a camera device, a sensing device, and a scanning device. The camera device includes a general camera, a stereo camera, a light field camera, and the like. The sensing device includes a laser device, a radar device, and the like. The scanning device includes a three-dimensional laser scanning device and the like. The capture device associated with the coding device 501 is a hardware component disposed in the coding device 501. For example, the capture device is a camera or a sensor of the terminal. Alternatively, the capture device associated with the coding device 501 is a hardware device connected to the coding device 501, for example, a camera connected to the server. Obtaining point cloud data in a device-generated manner means that the coding device 501 generates point cloud data based on a virtual object (such as a virtual three-dimensional object or a virtual three-dimensional scene obtained through three-dimensional modeling).

The coding device 501 is configured to code the geometry information of each point in the point cloud to obtain a geometry bitstream, and code the attribute information of each point in the point cloud to obtain an attribute bitstream. In some embodiments, a geometry coding process of the coding device 501 is mainly directed to geometric residual information of a to-be-coded point in the point cloud. The geometric residual information includes a signed residual value of the to-be-coded point in each direction (for example, an x-direction, a y-direction, and a z-direction). In some embodiments of this application, a coding process of the signed residual value is divided into a coding process of an unsigned residual value (for example, an absolute value of the signed residual value, referred to as a residual value for short below) and a coding process of residual sign information. For the coding process of the unsigned residual value, the coding device 501 determines a proper coding mode for the to-be-coded point in each direction, and codes an unsigned residual value of the to-be-coded point in each direction based on the determined coding mode. The geometry bitstream obtained by the coding device 501 through coding includes coding of the unsigned residual value of the to-be-coded point in each direction, and coding of residual sign information of the to-be-coded point in each direction. Then, the coding device 501 transmits, to the decoding device 502, the geometry bitstream and the attribute bitstream that are obtained through coding.

(2) Decoding device 502:

After receiving a compressed bitstream (including the attribute bitstream and the geometry bitstream) transmitted from the coding device 201, the decoding device 502 decodes the geometry bitstream to reconstruct the geometry information of each point in the point cloud, and decodes the attribute bitstream to reconstruct the attribute information of each point in the point cloud. In some embodiments, a geometry decoding process of the decoding device 502 is mainly directed to geometric residual coding of a to-be-decoded point in the point cloud in each direction (for example, the x-direction, the y-direction, and the z-direction). The geometric residual coding includes residual value coding of the to-be-decoded point in each direction and residual sign coding of the to-be-decoded point in each direction. For the residual value coding of the to-be-decoded point in each direction, the decoding device 502 determines a proper coding mode for the to-be-decoded point in each direction, and performs residual value decoding for the to-be-decoded point in each direction based on the determined coding mode, to reconstruct an unsigned residual value of the to-be-decoded point in each direction. For the residual sign coding of the to-be-decoded point in each direction, the decoding device 502 performs decoding to obtain residual sign information of the to-be-decoded point in each direction, based on which the decoding device 502 reconstructs a signed residual value of the to-be-decoded point in each direction, for example, reconstructed residual information of the to-be-decoded point, to reconstruct geometry information of the to-be-decoded point. Then, the decoding device 202 puts reconstructed geometry information and attribute information of each point in the point cloud in one-to-one correspondence, to reconstruct the point cloud.

In some embodiments of this application, the coding device determines a proper coding mode for the to-be-coded point in the point cloud in each direction for coding, thereby improving geometry coding efficiency of the point cloud. The decoding device determines a proper coding mode for the to-be-decoded point in the point cloud in each direction for decoding, thereby improving geometry decoding efficiency of the point cloud. The point cloud system described in some embodiments of this application is intended to more clearly describe the technical solutions of some embodiments of this application, and does not constitute any limitation on the technical solutions provided in the embodiments of this application. A person of ordinary skill in the art may be aware that, with evolution of system architectures and emergence of new service scenarios, the technical solutions provided in some embodiments of this application are also applicable to similar technical problems.

The following describes the point cloud processing solution according to some embodiments of this application in more details with reference to accompanying drawings.

An embodiment of this application provides a point cloud processing method. The point cloud processing method mainly describes content that a decoder side determines a proper coding mode for a to-be-decoded point in a point cloud in each direction, and performs decoding based on the determined coding mode. The point cloud processing method is performed by a computer device. For example, the computer device is the decoding device 502 in the point cloud processing system. As shown in FIG. 7, the point cloud processing method includes S601 to S603:

S601: Obtain coding data of a point cloud.

S602: Determine coding modes of a to-be-decoded point in the point cloud in K directions based on the coding data.

In S601 and S602, in a parsing process of a point cloud, coding data of the point cloud is obtained, and coding modes of a to-be-decoded point in the point cloud in K directions are determined based on the coding data of the point cloud. In some embodiments, a same coding mode is used for the to-be-decoded point in the K directions, or different coding modes are used for the to-be-decoded point in the K directions, K being a positive integer.

When a same coding mode is used for the to-be-decoded point in the K directions, the determining coding modes of a to-be-decoded point in the point cloud in K directions based on the coding data includes but is not limited to any one of the following:

(1) A coder side and a decoder side consider by default that a same coding mode is used in all of the K directions. In some embodiments, the coding data includes default setting information, the default setting information being set by default by the decoder side and the coder side. In this case, based on the default setting information, it is determined that a default coding mode is used for the to-be-decoded point in the K directions. If the default setting information indicates that the coding modes in the K directions are the same, a same default coding mode is used for the to-be-decoded point in all of the K directions. In some embodiments, the default setting information further indicates a specific default coding mode. For example, the default setting information indicates that the coding modes of the to-be-decoded point in the K directions are the same, and the same coding mode is a first coding mode, a second coding mode, or a third coding mode.

(2) Mode setting information is parsed out from a coding parameter set or a coded bitstream to determine the coding modes. In some embodiments, the coding data includes mode setting information, the mode setting information being parsed out from a coding parameter set or a coded bitstream (for example, the foregoing geometry bitstream) of the point cloud. In this case, if the mode setting information is common to the to-be-decoded point in the K directions, it is determined that a same coding mode is used for the to-be-decoded point in the K directions, and a coding mode common to the to-be-decoded point in the K directions is determined based on the mode setting information common to the to-be-decoded point in the K directions.

The mode setting information includes either or both of a residual division flag field (ptn_residual_divide_flag) and a number-of-occupied-bits division flag field (ptn_numbits_divide_flag). The determining a coding mode common to the to-be-decoded point in the K directions based on the mode setting information common to the to-be-decoded point in the K directions includes any one of the following cases:

① When the mode setting information includes the residual division flag field, and a value of the residual division flag field is a target value (for example, the target value is 1) (for example, when ptn _residual_divide_flag=1), it is determined that the coding mode common to the to-be-decoded point in the K directions is the first coding mode. When the value of the residual division flag field is a reference value (for example, the reference value is 0) (for example, when ptn_residual_divide_flag=0), it is determined that the coding mode common to the to-be-decoded point in the K directions is a fourth coding mode.

② When the mode setting information includes the number-of-occupied-bits division flag field, and a value of the number-of-occupied-bits division flag field is the target value (for example, when ptn_numbits_divide_flag=1), it is determined that the coding mode common to the to-be-decoded point in the K directions is the second coding mode. When the value of the number-of-occupied-bits division flag field is the reference value (for example, when ptn_numbits_divide_flag=0), it is determined that the coding mode common to the to-be-decoded point in the K directions is the fourth coding mode.

③ When the mode setting information includes the residual division flag field and the number-of-occupied-bits division flag field, and values of the residual division flag field and the number-of-occupied-bits division flag field are both the target value (for example, when ptn_residual_divide_flag=1 and ptn_numbits_divide_flag=1), it is determined that the coding mode common to the to-be-decoded point in the K directions is the third coding mode. When the value of the residual division flag field is the target value and the value of the number-of-occupied-bits division flag field is the reference value (for example, when ptn_residual_divide_flag=1 and ptn _numbits_divide_flag=0), it is determined that the coding mode common to the to-be-decoded point in the K directions is the first coding mode. When the value of the residual division flag field is the reference value and the value of the number-of-occupied-bits division flag field is the target value (for example, when ptn_residual_divide_flag=0 and ptn_numbits_divide_flag=1), it is determined that the coding mode common to the to-be-decoded point in the K directions is the second coding mode. When the values of the residual division flag field and the number-of-occupied-bits division flag field are both the reference value (for example, when ptn_residual_divide_flag=0 and ptn_numbits_divide_flag=0), it is determined that the coding mode common to the to-be-decoded point in the K directions is the fourth coding mode.

(3) A default decision threshold is set or a decision threshold is parsed out from the coded bitstream of the point cloud to decide the coding modes. In some embodiments, the coding data includes a decision threshold, the decision threshold being set by default by the decoder side and the coder side, or the decision threshold being parsed out from the coded bitstream of the point cloud. In this case, mode decision information is parsed out from the coded bitstream of the point cloud, and the coding modes of the to-be-decoded point in the K directions are decided based on the mode decision information and the decision threshold.

① The decision threshold includes a coding parsing threshold, and the mode decision information includes coding parsing information of the to-be-decoded point in the K directions. In this case, the deciding the coding modes of the to-be-decoded point in the K directions based on the mode decision information and the decision threshold includes: when a same coding mode is used for the to-be-decoded point in the K directions, determining statistical characteristic information of the coding parsing information of the to-be-decoded point in the K directions, and determining a coding mode common to the to-be-decoded point in the K directions based on a magnitude relationship between the statistical characteristic information and the coding parsing threshold. The statistical characteristic information includes any one of an average value of the coding parsing information of the to-be-decoded point in the K directions, a minimum value of the coding parsing information of the to-be-decoded point in the K directions, and a maximum value of the coding parsing information of the to-be-decoded point in the K directions.

In some embodiments, the coding parsing threshold includes a residual threshold (t1/2, t1>0), and the coding parsing information includes residual parsing information. Statistical characteristic information of residual parsing information of the to-be-decoded point in the K directions is determined, and a coding mode common to the to-be-decoded point in the K directions is determined based on a magnitude relationship between the statistical characteristic information and the residual threshold. In some embodiments, when the statistical characteristic information is less than the residual threshold, it is determined that the coding mode common to the to-be-decoded point in the K directions is the first coding mode. When the statistical characteristic information is greater than or equal to the residual threshold, it is determined that the coding mode common to the to-be-decoded point in the K directions is the fourth coding mode.

In some embodiments, the coding parsing threshold includes a number-of-occupied-bits threshold (t2/2, t2>0), and the coding parsing information includes number-of-occupied-bits parsing information. Statistical characteristic information of number-of-occupied-bits parsing information of the to-be-decoded point in the K directions is determined, and a coding mode common to the to-be-decoded point in the K directions is determined based on a magnitude relationship between the statistical characteristic information and the number-of-occupied-bits threshold. In some embodiments, when the statistical characteristic information is less than the number-of-occupied-bits threshold, it is determined that the coding mode common to the to-be-decoded point in the K directions is the second coding mode. When the statistical characteristic information is greater than or equal to the number-of-occupied-bits threshold, it is determined that the coding mode common to the to-be-decoded point in the K directions is the fourth coding mode.

② The decision threshold includes a quantization threshold, the mode decision information includes a QP common to the to-be-decoded point in the K directions, and a same coding mode is used for the to-be-decoded point in the K directions. In this case, the deciding the coding modes of the to-be-decoded point in the K directions based on the mode decision information and the decision threshold includes: determining a coding mode common to the to-be-decoded point in the K directions based on a magnitude relationship between the QP and the quantization threshold.

In some embodiments, the quantization threshold includes a first quantization threshold (t3, t3>0). If the QP is less than the first quantization threshold, it is determined that the coding mode common to the to-be-decoded point in the K directions is any one of the first coding mode, the second coding mode, or the third coding mode. If the QP is greater than or equal to the first quantization threshold, it is determined that the coding mode common to the to-be-decoded point in the K directions is the fourth coding mode.

In some embodiments, the quantization threshold includes a second quantization threshold (t4, t4>0). If the QP is greater than the second quantization threshold, it is determined that the coding mode common to the to-be-decoded point in the K directions is any one of the first coding mode, the second coding mode, or the third coding mode. If the QP is less than or equal to the second quantization threshold, it is determined that the coding mode common to the to-be-decoded point in the K directions is the fourth coding mode.

In some embodiments, the quantization threshold includes a first quantization threshold (t3, t3>0) and a second quantization threshold (t4, t4>0), the second quantization threshold being less than the first quantization threshold. If the QP is greater than the second quantization threshold and is less than the first quantization threshold, it is determined that the coding mode common to the to-be-decoded point in the K directions is any one of the first coding mode, the second coding mode, or the third coding mode. If the QP is greater than or equal to the first quantization threshold or is less than or equal to the second quantization threshold, it is determined that the coding mode common to the to-be-decoded point in the K directions is the fourth coding mode.

③ The decision threshold includes a bounding box threshold (t5), the mode decision information includes a bounding box size of a prediction tree of the point cloud, and the bounding box size includes sizes in the K directions. In this case, the deciding the coding modes of the to-be-decoded point in the K directions based on the mode decision information and the decision threshold includes: when a same coding mode is used for the to-be-decoded point in the K directions, determining a target size feature value based on the sizes in the K directions, and determining a coding mode common to the to-be-decoded point in the K directions based on a magnitude relationship between the target size feature value and the bounding box threshold. The target size feature value is a ratio between sizes in any two of the K directions. For example, the bounding box size includes sizes in three directions: an x-direction size $BoundingBoxSize_x$, a y-direction size $BoundingBoxSize_y$, and a z-direction size $BoundingBoxSize_z$, and the target size feature value is a ratio ($BoundingBoxSize_x/BoundingBoxSize_z$) between the x-direction size $BoundingBoxSize_x$ and the z-direction size $BoundingBoxSize_z$.

When different coding modes are used for the to-be-decoded point in the K directions, the determining coding modes of a to-be-decoded point in the point cloud in K directions based on the coding data of the point cloud includes but is not limited to any one of the following:

(1) The coder side and the decoder side consider by default that different coding modes are used in the K directions. In some embodiments, the coding data includes default setting information, the default setting information being set by default by the decoder side and the coder side. In this case, based on the default setting information, it is determined that a default coding mode is used for the to-be-decoded point in the K directions. If the default setting information indicates that the coding modes in the K directions are different, different default coding modes are used for the to-be-decoded point in different directions of the K directions. In some embodiments, the default setting information further indicates a default coding mode. For example, the default setting information indicates that the coding modes in the K directions (for example, the x-direction, the y-direction, and the z-direction) are different, and a coding mode of the to-be-decoded point in the x-direction is the first coding mode, a coding mode of the to-be-decoded point in the y-direction is the second coding mode, and a coding mode of the to-be-decoded point in the z-direction is the third coding mode.

(2) Mode setting information is parsed out from the coding parameter set or the coded bitstream to determine the coding modes. In some embodiments, the coding data includes mode setting information, the mode setting information being parsed out from the coding parameter set or the coded bitstream (for example, the foregoing geometry bitstream) of the point cloud. In this case, if the to-be-decoded point has one piece of mode setting information in each of the K directions, it is determined that different coding modes are used for the to-be-decoded point in the K directions, and a coding mode of the to-be-decoded point in each direction is determined based on the mode setting information of the to-be-decoded point in each direction.

A $k^{th}$ direction of the K directions is used as an example. Mode setting information of the to-be-decoded point in the $k^{th}$ direction includes either or both of a residual division flag field (ptn_residual_divide_flag[k]) and a number-of-occupied-bits division flag field (ptn_numbits_divide_flag[k]), k being a positive integer less than or equal to K. The determining a coding mode of the to-be-decoded point in each direction based on the mode setting information of the to-be-decoded point in each direction includes:

① When the mode setting information includes the residual division flag field, and a value of the residual division flag field of the to-be-decoded point in the $k^{th}$ direction is a target value (for example, the target value is 1) (for example, when ptn_residual_divide_flag[k]=1), it is determined that a coding mode of the to-be-decoded point in the $k^{th}$ direction is the first coding mode. When the value of the residual division flag field of the to-be-decoded point in the $k^{th}$ direction is a reference value (for example, the reference value is 0) (for example, when ptn_residual_divide_flag[k]=0), it is determined that the coding mode of the to-be-decoded point in the $k^{th}$ direction is the fourth coding mode.

② When the mode setting information includes the number-of-occupied-bits division flag field, and a value of the number-of-occupied-bits division flag field of the to-be-decoded point in the $k^{th}$ direction is the target value (for example, when
ptn_numbits_divide_flag[k]=1), it is determined that the coding mode of the to-be-decoded point in the $k^{th}$ direction is the second coding mode. When the value of the number-of-occupied-bits division flag field of the to-be-decoded point in the $k^{th}$ direction is the reference value (for example, when ptn_numbits_divide_flag[k]=0), it is determined that the coding mode of the to-be-decoded point in the $k^{th}$ direction is the fourth coding mode.

③ When the mode setting information includes the residual division flag field and the number-of-occupied-bits division flag field, and values of the residual division flag field and the number-of-occupied-bits division flag field of the to-be-decoded point in the $k^{th}$ direction are both the target value (for example, when ptn_residual_divide_flag[k]=1 and ptn_numbits_divide_flag[k]=1), it is determined that the coding mode of the to-be-decoded point in the $k^{th}$ direction is the third coding mode. When the value of the residual division flag field of the to-be-decoded point in the $k^{th}$ direction is the target value and the value of the number-of-occupied-bits division flag field of the to-be-decoded point in the $k^{th}$ direction is the reference value (for example, when ptn_residual_divide_flag[k]=1 and ptn_numbits_divide_flag[k]=0), it is determined that the coding mode of the to-be-decoded point in the $k^{th}$ direction is the first coding mode. When the value of the residual division flag field of the to-be-decoded point in the $k^{th}$ direction is the reference value and the value of the number-of-occupied-bits division flag field of the to-be-decoded point in the $k^{th}$ direction is the target value (for example, when ptn_residual_divide_flag[k]=0 and ptn_numbits_divide_flag[k]=1), it is determined that the coding mode of the to-be-decoded point in the $k^{th}$ direction is the second coding mode. When the values of the residual division flag field and the number-of-occupied-bits division flag field of the to-be-decoded point in the $k^{th}$ direction are both the reference value (for example, when ptn_residual_divide_flag[k]=0 and ptn_numbits_divide_flag[k]=0), it is determined that the coding mode of the to-be-decoded point in the $k^{th}$ direction is the fourth coding mode.

(3) A default decision threshold is set or a decision threshold is parsed out from the coded bitstream of the point cloud to decide the coding modes. In some embodiments, the coding data includes a decision threshold, the decision threshold being set by default by the decoder side and the coder side, or the decision threshold being parsed out from the coded bitstream of the point cloud. In this case, mode decision information is parsed out from the coded bitstream of the point cloud, and the coding modes of the to-be-decoded point in the K directions are decided based on the mode decision information and the decision threshold.

① The decision threshold includes a coding parsing threshold, and the mode decision information includes coding parsing information of the to-be-decoded point in the K directions. In this case, the deciding the coding modes of the to-be-decoded point in the K directions based on the mode decision information and the decision threshold includes: when different coding modes are used for the to-be-decoded point in the K directions, determining a coding mode of the to-be-decoded point in each direction based on a magnitude relationship between the coding parsing threshold and coding parsing information of the to-be-decoded point in each direction.

In some embodiments, the coding parsing threshold includes a residual threshold (t1/2, t1>0). The $k^{th}$ direction of the K directions is used as an example. Coding parsing information of the to-be-decoded point in the $k^{th}$ direction includes residual parsing information. A coding mode of the to-be-decoded point in the $k^{th}$ direction is determined based on a magnitude relationship between the residual threshold and the residual parsing information of the to-be-decoded point in the $k^{th}$ direction. In some embodiments, when the residual parsing information of the to-be-decoded point in the $k^{th}$ direction is less than the residual threshold, it is determined that the coding mode of the to-be-decoded point in the $k^{th}$ direction is the first coding mode. When the residual parsing information of the to-be-decoded point in the $k^{th}$ direction is greater than or equal to the residual threshold, it is determined that the coding mode of the to-be-decoded point in the $k^{th}$ direction is the fourth coding mode.

In some embodiments, the coding parsing threshold includes a number-of-occupied-bits threshold (t2/2, t2>0). The $k^{th}$ direction of the K directions is used as an example. Coding parsing information of the to-be-decoded point in the $k^{th}$ direction includes number-of-occupied-bits parsing information. A coding mode of the to-be-decoded point in the $k^{th}$

direction is determined based on a magnitude relationship between the number-of-occupied-bits threshold and the number-of-occupied-bits parsing information of the to-be-decoded point in the $k^{th}$ direction. In some embodiments, when the number-of-occupied-bits parsing information of the to-be-decoded point in the $k^{th}$ direction is less than the number-of-occupied-bits threshold, it is determined that the coding mode of the to-be-decoded point in the $k^{th}$ direction is the second coding mode. When the number-of-occupied-bits parsing information of the to-be-decoded point in the $k^{th}$ direction is greater than or equal to the number-of-occupied-bits threshold, it is determined that the coding mode of the to-be-decoded point in the $k^{th}$ direction is the fourth coding mode.

② The decision threshold includes a bounding box threshold (t5), the mode decision information includes a bounding box size of a prediction tree of the point cloud, and the bounding box size includes sizes in the K directions. In this case, the deciding the coding modes of the to-be-decoded point in the K directions based on the mode decision information and the decision threshold includes: when different coding modes are used for the to-be-decoded point in the K directions, determining a size feature value of each of the K directions based on the sizes in the K directions, and determining a coding mode of the to-be-decoded point in a corresponding direction based on a magnitude relationship between the bounding box threshold and the size feature value of each direction. A size feature value of the $k^{th}$ direction is a ratio between a size in the $k^{th}$ direction and a size in another direction (any direction in the K directions except the $k^{th}$ direction). For example, the bounding box size includes sizes in three directions: an x-direction size $BoundingBoxSize_x$, a y-direction size $BoundingBoxSize_y$, and a z-direction size $BoundingBoxSize_z$, and a size feature value of the x-direction is a ratio ($BoundingBoxSize_x/BoundingBoxSize_z$) between the x-direction size $BoundingBoxSize_x$ and the z-direction size $BoundingBoxSize_z$.

S603: Decode the to-be-decoded point based on the determined coding modes.

After the coding modes of the to-be-decoded point in the K directions are determined, the to-be-decoded point is decoded based on the determined coding modes. In some embodiments, the decoding the to-be-decoded point based on the determined coding modes includes: performing residual value decoding for the to-be-decoded point based on the determined coding modes, to obtain reconstructed residual values of the to-be-decoded point in the K directions; performing residual sign decoding for the to-be-decoded point, to obtain reconstructed residual sign information of the to-be-decoded point in the K directions; determining reconstructed residual information of the to-be-decoded point based on the reconstructed residual values of the to-be-decoded point in the K directions and the reconstructed residual sign information of the to-be-decoded point in the K directions; and reconstructing geometry information of the to-be-decoded point based on the reconstructed residual information of the to-be-decoded point.

The reconstructed residual values, obtained by performing residual value decoding for the to-be-decoded point based on the determined coding modes, of the to-be-decoded point in the K directions are reconstructed unsigned residual values (for example, absolute values of residual values), residual sign decoding further may be performed for the to-be-decoded point to obtain the reconstructed residual sign information of the to-be-decoded point in the K directions, and residual information of the to-be-decoded point is reconstructed based on the reconstructed residual values of the to-be-decoded point in the K directions and the reconstructed residual sign information of the to-be-decoded point in the K directions. For example, reconstructed residual values of the to-be-decoded point in the x-direction, the y-direction, and the z-direction constitute coordinates (2, 5, 3), reconstructed residual sign information of the to-be-decoded point in the x-direction indicates that a residual value of the to-be-decoded point in the x-direction is a negative number, reconstructed residual sign information of the to-be-decoded point in the y-direction indicates that a residual value of the to-be-decoded point in the y-direction is a negative number, and reconstructed residual sign information of the to-be-decoded point in the z-direction indicates that a residual value of the to-be-decoded point in the z-direction is a negative number. In this case, the reconstructed residual information of the to-be-decoded point is (-2, -5, -3).

The $k^{th}$ direction of the K directions is used as an example herein to describe residual value decoding processes in different coding modes:

(1) When the coding mode of the to-be-decoded point in the $k^{th}$ direction is the first coding mode, the first coding mode being a coding mode of coding a residual value of the to-be-decoded point in the $k^{th}$ direction after-remainder calculation, a residual value decoding process in the first coding mode includes as follows: parsing a number-of-occupied-bits field of the to-be-decoded point in the $k^{th}$ direction (for example, ptn_residual_numbits[k]), to obtain a number B[k] of occupied bits of a residual quotient A1[k] of the to-be-decoded point in the $k^{th}$ direction; parsing B[k] bit values in a bit value field of the to-be-decoded point in the $k^{th}$ direction (for example, B[k] bit values of ptn_residual_value_per[k]), to obtain the residual quotient A1[k]; parsing a residual remainder field of the to-be-decoded point in the $k^{th}$ direction (for example, ptn_residual_abs_remaining[k]), to obtain a residual remainder A2[k] of the to-be-decoded point in the $k^{th}$ direction; and determining a reconstructed residual value A[k] ($A[k]=A1[k]\times d+A2[k]$) of the to-be-decoded point in the $k^{th}$ direction based on the residual quotient A1[k] and the residual remainder A2[k], d representing a divisor in-remainder calculation, for example, if the remainder calculation is performing division by 2 and obtaining a remainder, d=2.

(2) When the coding mode of the to-be-decoded point in the $k^{th}$ direction is the second coding mode, the second coding mode being a coding mode of coding a number of occupied bits of the residual value of the to-be-decoded point in the $k^{th}$ direction after-remainder calculation, a residual value decoding process in the second coding mode includes as follows: parsing a number-of-occupied-bits field of the to-be-decoded point in the $k^{th}$ direction (for example, ptn_residual_numbits[k]), to obtain a number-of-occupied-bits quotient B1[k] of the to-be-decoded point in the $k^{th}$ direction; parsing a number-of-occupied-bits remainder field of the to-be-decoded point in the $k^{th}$ direction (for example, ptn_numbits_remaining[k]), to obtain a number-of-occupied-bits remainder B2[k] of the to-be-decoded point in the $k^{th}$ direction; determining a number B[k] (B[k]=B1[k]×d+B2[k]) of occupied bits of a reconstructed residual value A[k] of the to-be-decoded point in the $k^{th}$ direction based on the number-of-occupied-bits quotient B1[k] and the number-of-occupied-bits remainder B2[k]; and parsing B[k] bit values in a bit value field of the to-be-decoded point in the $k^{th}$ direction (for example, B[k] bit values of ptn_residual_value_per[k]), to obtain the reconstructed residual value A[k] of the to-be-decoded point in the $k^{th}$ direction, d representing a divisor in-remainder calculation, for example, if the remainder calculation is performing division by 2 and obtaining a remainder, d=2.

(3) When the coding mode of the to-be-decoded point in the $k^{th}$ direction is the third coding mode, the third coding mode being a coding mode of performing remainder calculation on the residual value of the to-be-decoded point in the $k^{th}$ direction, then performing remainder calculation on a number of occupied bits of a remainder calculation result, and then performing coding, a residual value decoding process in the third coding mode includes as follows: parsing a number-of-occupied-bits field of the to-be-decoded point in the $k^{th}$ direction (for example, ptn_residual_numbits[k]), to obtain a number-of-occupied-bits quotient B1[k] of the to-be-decoded point in the $k^{th}$ direction; parsing a number-of-occupied-bits remainder field of the to-be-decoded point in the $k^{th}$ direction (for example, ptn_numbits_remaining[k]), to obtain a number-of-occupied-bits remainder B2[k] of the to-be-decoded point in the $k^{th}$ direction; determining a number B[k] (B[k]=B1[k]×d+B2[k]) of occupied bits of a residual quotient A1[k] of the to-be-decoded point in the $k^{th}$ direction based on the number-of-occupied-bits quotient B1[k] and the number-of-occupied-bits remainder B2[k]; parsing B[k] bit values in a bit value field of the to-be-decoded point in the $k^{th}$ direction (ifor example, B[k] bit values of ptn_residual_value_per[k]), to obtain the residual quotient A1[k]; parsing a residual remainder field of the to-be-decoded point in the $k^{th}$ direction (for example, ptn_residual_abs_remaining[k]), to obtain a residual remainder A2[k] of the to-be-decoded point in the $k^{th}$ direction; and determining a reconstructed residual value A[k] (A[k]=A1[k]×d+A2[k]) of the to-be-decoded point in the $k^{th}$ direction based on the residual quotient A1[k] and the residual remainder A2[k], d representing a divisor in-remainder calculation, for example, if the remainder calculation is performing division by 2 and obtaining a remainder, d=2.

(4) When the coding mode of the to-be-decoded point in the $k^{th}$ direction is the fourth coding mode, the fourth coding mode being a coding mode of directly coding the residual value of the to-be-decoded point in the $k^{th}$ direction without remainder calculation, a residual value decoding process in the fourth coding mode includes as follows: parsing a number-of-occupied-bits field of the to-be-decoded point in the $k^{th}$ direction (for example, ptn_residual_numbits[k]), to obtain a number B[k] of occupied bits of the residual value A[k] of the to-be-decoded point in the $k^{th}$ direction; and parsing B[k] bit values in a bit value field of the to-be-decoded point in the $k^{th}$ direction (for example, B[k] bit values of ptn_residual_value_per[k]), to obtain the residual value A[k] of the to-be-decoded point in the $k^{th}$ direction.

After the residual value decoding processes are described, residual sign decoding processes are described herein. The performing residual sign decoding for the to-be-decoded point, to obtain reconstructed residual sign information of the to-be-decoded point in the K directions includes any one of the following manners:

(1) Sign information in the K directions is directly parsed. In some embodiments, residual sign coding of the to-be-decoded point in the K directions is read from the coded bitstream of the point cloud, and then the residual sign coding of the to-be-decoded point in the K directions is parsed, to obtain the reconstructed residual sign information of the to-be-decoded point in the K directions.

(2) A sign association relationship with a previous point (for example, a first-generation parent node in the predictive coding technology described above) is set by default or determined by parsing sign indication information. In some embodiments, sign indication information (signFlag) is obtained, the sign indication information being set by default by the coder side and the decoder side, or parsed out from the coding parameter set or the coded bitstream of the point cloud. In some embodiments, a sign association relationship between the to-be-decoded point and a previous point of the to-be-decoded point is determined based on a value of the sign indication information. For example, when the value of the sign indication information is a target value (for example, the target value is 1) (for example, when signFlag=1), it is determined that there is a sign association relationship between the to-be-decoded point and the previous point of the to-be-decoded point. When the value of the sign indication information is a reference value (for example, the reference value is 0) (for example, when signFlag=0), it is determined that there is no sign association relationship between the to-be-decoded point and the previous point of the to-be-decoded point. If there is a sign association relationship between the to-be-decoded point and the previous point of the to-be-decoded point, the reconstructed residual sign information of the to-be-decoded point in the K directions is determined based on reconstructed residual sign information of the previous point of the to-be-decoded point in the K directions. For example, the reconstructed residual sign information of the to-be-decoded point in the K directions is the same as the reconstructed residual sign information of the previous point of the to-be-decoded point in the K directions by direction correspondence, or, reconstructed residual sign information of the to-be-decoded point in each of the K directions is the same as reconstructed residual sign information of the previous point in the same direction. If there is no sign association relationship between the to-be-decoded point and the previous point of the to-be-decoded point, the residual sign coding of the to-be-decoded point in the K directions is read from the coded bitstream of the point cloud, and the residual sign coding of the to-be-decoded point in the K directions is parsed, to obtain the reconstructed residual sign information of the to-be-decoded point in the K directions.

The parsing the residual sign coding of the to-be-decoded point in the K directions, to obtain the reconstructed residual sign information of the to-be-decoded point in the K directions includes any one of the following:

First: The residual sign coding of the to-be-decoded point in the K directions is directly parsed. In some embodiments, ptn_residual_sign_flag fields (for example, residual sign fields) respectively corresponding to the to-be-decoded point in the K directions are directly parsed.

Second: The residual sign coding of the to-be-decoded point in the K directions is parsed by using K2 context models. In some embodiments, ptn_residual_sign_flag (for example, residual sign fields) of the to-be-decoded point in the K directions is parsed by using K2 context models, K2 being a positive integer less than or equal to K.

Third: The coded bitstream of the to-be-decoded point is parsed based on the reconstructed residual values of the to-be-decoded point in the K directions and a distance between the previous point of the to-be-decoded point and a parent node of the previous point, to obtain residual sign information (for example, signs) of the to-be-decoded point in the K directions.

In some embodiments, for example, the to-be-decoded point is $P_i$, the previous point of the to-be-decoded point is $P_{i-1}$, the parent node of the previous point is $P_{i-2}$, the K directions are the x-direction, the y-direction, and the z-direction. For a process of decoding the coded bitstream of the to-be-decoded point based on absolute values $x_r$, $y_r$, and $z_r$ of residual values of the to-be-decoded point $P_i$ and a distance $d_0$ between the previous point $P_{i-1}$ and the parent node $P_{i-2}$ of the previous point to obtain signs of the residual values of the to-be-decoded point, refer to the following description.

If 0 represents a positive sign and 1 represents a negative sign, there are a total of eight sign combinations of the residual values in the x-direction, the y-direction, and the z-direction: 000, 001, 010, 011, 100, 101, 110, and 111. The signs of the residual values are combined with the absolute values $x_r$, $y_r$, and $z_r$ of the residual values to obtain eight possible residual value combinations: $(x_r, y_r, z_r)$, $(x_r, y_r, -z_r)$, $(x_r, -y_r, z_r)$, $(x_r, -y_r, -z_r)$, $(-x_r, y_r, z_r)$, $(x_v, y_r, -z_r)$, $(-x_r, -y_r, z_r)$, and $(-x_r, -y_r, -z_r)$.

The eight possible residual value combinations are added to coordinate values $(x_{i-1}, y_{i-1}, z_{i-1})$ of the previous point $P_{i-1}$ respectively, to obtain eight possible points $P_j$ and their coordinate values $(x_j, y_j, z_j)$.

A distance $d_j$ from each possible point $P_j$ to the parent node $P_{i-2}$ of the previous point $P_{i-1}$ is calculated.

$d_j$ is compared with $d_0$, and a combination of the signs of the residual values with $d_j$ less than $d_0$ is deleted. N feasible combinations of the signs of the residual values remain, and are sequentially numbered 0, 1, 2, ..., N-1.

The bitstream of the to-be-decoded point is decoded based on the feasible combinations of the signs of the residual values and their numbers, to obtain the signs of the residual values of the to-be-decoded point $P_i$.

An actual number of the signs of the residual values is decoded in a binary form from a most significant bit to a least significant bit. When a $p^{th}$ bit of the actual number is decoded, it is assumed that the $p^{th}$ bit is 1 and a remaining undecoded bit is 0, and a decimal value of an obtained number is denoted as n. If n>N-1, the $p^{th}$ bit of the number is 0. Otherwise, context-based arithmetic decoding is performed to obtain a value of the $p^{th}$ bit of the actual number. A next bit continues to be decoded until the actual number of the signs of the residual values is obtained after 3 bits are decoded. Corresponding signs of the residual values are found in the feasible combinations of the signs of the residual values based on the actual number, to obtain the signs of the residual values of the to-be-decoded point $P_i$.

After the reconstructed residual values of the to-be-decoded point in the K directions and the reconstructed residual sign information of the to-be-decoded point in the K directions are obtained, the reconstructed residual information of the to-be-decoded point is determined based on the reconstructed residual values of the to-be-decoded point in the K directions and the reconstructed residual sign information of the to-be-decoded point in the K directions. After the reconstructed residual information of the to-be-decoded point is determined, the geometry information of the to-be-decoded point is reconstructed based on the reconstructed residual information of the to-be-decoded point. In some embodiments, predicted geometry information of the to-be-decoded point is obtained, and the geometry information of the to-be-decoded point is reconstructed based on the predicted geometry information of the to-be-decoded point and the reconstructed residual information, to obtain reconstructed geometry information of the to-be-decoded point. The predicted geometry information of the to-be-decoded point is predicted by using a prediction tree. In some embodiments, a prediction tree of the point cloud is configured for reflecting a connection relationship between points in the point cloud and indicating prediction modes (for example, prediction modes in the predictive coding technologies described above) of the points in the point cloud. Prediction is performed for the to-be-decoded point based on a prediction mode of the to-be-decoded point, to obtain the predicted geometry information of the to-be-decoded point.

A decoding process in some embodiments of this application is performed by using a context model.

(1) ptn_residual_eq0_flag of the to-be-decoded point in the K directions is parsed by using K1 context models ctx_residual_eq0[k] (k=1, 2, ..., K1). K1 is a positive integer less than or equal to K. When K1 is equal to K, it indicates that context models used in different directions are independent of each other. For example, ptn_residual_eq0_flag in the x-direction, the y-direction, and the z-direction is parsed by using three context models (a first context model, a second context model, and a third context model), the x-direction is associated with the first context model, the y-direction is associated with the second context model, and the z-direction is associated with the third context model. When K1<K, it indicates that context models used in different directions are correlated. For example, ptn_residual_eq0_flag in the x-direction, the y-direction, and the z-direction is parsed by using two context models (a first context model and a second context model), the x-direction and the y-direction are associated with the first context model, and the z-direction is associated with the second context model.

(2) ptn_residual_sign_flag of the to-be-decoded point in the K directions is parsed by using K2 context models ctx_residual_sign[k] (k=1, 2, ..., K2). K2 is a positive integer less than or equal to K. When K2 is equal to K, it indicates that context models used in different directions are independent of each other. When K2<K, it indicates that context models used in different directions are correlated.

(3) B[k] bit values in bit value fields of the to-be-decoded point in the K directions are parsed by using K3×N context models ctxNumBits[k][N] (k=1, 2, ..., K3). K3 is a positive integer less than or equal to K, and N is a positive integer greater than or equal to B[k]. Similarly, when K3 is equal to K, it indicates that context model groups (including N context models) used in different directions are independent of each other. When K3<K, it indicates that context model groups (including N context models) used in different directions are correlated. The $k^{th}$ direction of the K directions is used as an example. Parsing the B[k] bit values in the bit value field of the to-be-decoded point in the $k^{th}$ direction by using N context models includes any one of the following cases:

① The B[k] bit values are parsed by using N independent context models, N being equal to B[k]. A context model used to parse each of the B[k] bit values is independently selected from the N context models. For example, assuming that B[k]=5, and 5 bit values are represented as b4, b3, b2, b1, and b0, b4 is parsed by using a first context model, b3 is parsed by using a second context model, b2 is parsed by using a third context model, b1 is parsed by using a fourth context model, and b0 is parsed by using a fifth context model.

② The B[k] bit values are parsed by using N fully-correlated context models, N being greater than B[k]. A context model used to parse an $a^{th}$ bit value of the B[k] bit values is selected from the N context models depending on parsing results of a-1 bit values before the $a^{th}$ bit value, a being a positive integer less than or equal to B[k]. For example, assuming that B[k]=5, and 5 bit values are represented as b4, b3, b2, b1, and b0, parsing the 5 bit values by using N fully-correlated context models may be represented as follows:

$$ctxIdx=0 \text{ for } b0;$$

$$ctxIdx=1+b0 \text{ for } b1;$$

$$ctxIdx=3+b1b0 \text{ for } b2;$$

$$ctxIdx=7+b2b1b0 \text{ for } b3;$$

and

$$ctxIdx=15+b3b2b1b0 \text{ for } b4.$$

ctxIdx=0 for b0 indicates that b0 is parsed by using a context model numbered 0 in the N context models. ctxIdx=1+b0 for b1 indicates that a context model used to parse b1 is selected depending on a parsing result of b0, or, b1 is parsed by using a context model numbered 1+b0 in the N context models. b4, b3, and b2 are similar to b1, and details are not described herein again.

③ The B[k] bit values are parsed by using N partially-correlated context models, N being greater than B[k]. A context model used to parse an $(a1)^{th}$ bit value of the B[k] bit values is selected from the N context models depending on a parsing result of a value before the $(a1)^{th}$ bit value, and a context model used to parse an $(a2)^{th}$ bit value of the B[k] bit values is independently selected from the N context models, both a1 and a2 being positive integers less than or equal to B[k], and a1 being not equal to a2. For example, assuming that B[k]=5, and 5 bit values are represented as b4, b3, b2, b1, and b0, parsing the 5 bit values by using N partially-correlated context models may be represented as follows:

$$ctxIdx=0 \text{ for } b0;$$

$$ctxIdx=1+b0 \text{ for } b1;$$

$$ctxIdx=3+b1b0 \text{ for } b2;$$

$$ctxIdx=7 \text{ for } b3;$$

and

$$ctxIdx=8 \text{ for } b4.$$

ctxIdx=0 for b0 indicates that b0 is parsed by using a context model numbered 0 in the N context models. b4 and b3 are similar to b0, and details are not described herein again. ctxIdx=1+b0 for b1 indicates that a context model used to parse b1 is selected depending on a parsing result of b0, or, b1 is parsed by using a context model numbered 1+b0 in the N context models. b2 is similar to b1, and details are not described herein again.

(4) Residual remainder fields (ptn_residual_abs_remaining) of the to-be-decoded point in the K directions are parsed by using K4 context models. When the coding modes of the to-be-decoded point in the K directions are the first coding mode or the third coding mode, ptn_residual_abs_remaining is involved in the parsing process, and ptn_residual_abs_remaining of the to-be-decoded point in the K directions is parsed by using K4 context models. K4 is a positive integer less than or equal to K. When K4 is equal to K, it indicates that context models used in different directions are independent of each other. When K4<K, it indicates that context models used in different directions are correlated.

(5) Number-of-occupied-bits remainder fields (ptn_numbits_remaining) of the to-be-decoded point in the K directions are parsed by using K5 context models. When the coding modes of the to-be-decoded point in the K directions are the second coding mode or the third coding mode, ptn_numbits_remaining is involved in the parsing process, and ptn_numbits_remaining of the to-be-decoded point in the K directions is parsed by using K5 context models. K5 is a positive integer less than or equal to K. When K5 is equal to K, it indicates that context models used in different directions are independent of each other. When K5<K, it indicates that context models used in different directions are correlated.

In some embodiments of this application, when a to-be-decoded point in a point cloud may be decoded, coding data of the point cloud is obtained, a coding mode of the to-be-decoded point in the point cloud in each direction is determined based on the coding data, and the to-be-decoded point is decoded based on the determined coding mode. In some embodiments of this application, a proper coding mode is determined for each direction of the to-be-decoded point for decoding by using the coding data, thereby improving geometry decoding efficiency of the point cloud.

Some embodiments of this application provide a point cloud processing method. The point cloud processing method mainly describes content that a coder side determines a proper coding mode for a to-be-coded point in a point cloud in each direction, and performs coding based on the determined coding mode. The point cloud processing method is performed by a computer device. For example, the computer device is the coding device 501 in the point cloud processing system. As shown in FIG. 8, the point cloud processing method includes S701 to S703:

S701: Set coding data of a point cloud.

S702: Determine coding modes of a to-be-coded point in the point cloud in K directions based on the coding data.

In S701 and S702, in a coding process of a point cloud, coding data of the point cloud is set, and coding modes of a to-be-coded point in the point cloud in K directions are determined based on the coding data of the point cloud. A same coding mode is used for the to-be-coded point in the K directions, or different coding modes are used for the to-be-coded point in the K directions, K being a positive integer.

When a same coding mode is used for the to-be-coded point in the K directions, the determining coding modes of a to-be-coded point in the point cloud in K directions based on the coding data includes but is not limited to any one of the following:

(1) A coder side and a decoder side consider by default that a same coding mode is used in all of the K directions. In some embodiments, the coding data includes default setting information, the default setting information being set by default by the coder side and the decoder side. In this case, based on the default setting information, it is determined that a default coding mode is used for the to-be-coded point in the K directions. If the default setting information indicates that the coding modes in the K directions are the same, a same default coding mode is used for the to-be-coded point in all of the K directions. In some embodiments, the default setting information further indicates a default coding mode. For example, the default setting information indicates that the coding modes of the to-be-coded point in the K directions are the same, and the same coding mode is a first coding mode, a second coding mode, or a third coding mode.

(2) The coder side sets mode setting information to determine the coding modes, the mode setting information being written in a coding parameter set or a coded bitstream of the point cloud. In some embodiments, the coding data includes mode setting information. In this case, if the mode setting information is common to the to-be-coded point in the K directions, it is determined that a same coding mode is used for the to-be-coded point in the K directions, and a coding mode common to the to-be-coded point in the K directions is determined based on the mode setting information common to the to-be-coded point in the K directions.

The mode setting information includes either or both of a residual division flag field (ptn_residual_divide_flag) and a number-of-occupied-bits division flag field (ptn_numbits_divide_flag). The determining a coding mode common to the to-be-coded point in the K directions based on the mode setting information common to the to-be-coded point in the K directions includes any one of the following cases:

① When the mode setting information includes the residual division flag field, and the residual division flag field is set to a target value (for example, the target value is 1) (for example, when ptn_residual_divide_flag is set to 1), it is determined that the coding mode common to the to-be-coded point in the K directions is the first coding mode. When the residual division flag field is set to a reference value (for example, the reference value is 0) (for example, when ptn_residual_divide_flag is set to 0), it is determined that the coding mode common to the to-be-coded point in the K directions is a fourth coding mode.

② When the mode setting information includes the number-of-occupied-bits division flag field, and the number-of-occupied-bits division flag field is set to the target value (for example, when ptn_numbits_divide_flag is set to 1), it is determined that the coding mode common to the to-be-coded point in the K directions is the second coding mode. When the number-of-occupied-bits division flag field is set to the reference value (for example, when ptn_numbits_divide_flag is set to 0), it is determined that the coding mode common to the to-be-coded point in the K directions is the fourth coding mode.

③ When the mode setting information includes the residual division flag field and the number-of-occupied-bits division flag field, and the residual division flag field and the number-of-occupied-bits division flag field are both set to the target value (for example, when ptn_residual_divide_flag and ptn_numbits_divide_flag are both set to 1), it is determined that the coding mode common to the to-be-coded point in the K directions is the third coding mode. When the residual division flag field is set to the target value and the number-of-occupied-bits division flag field is set to the reference value (for example, when ptn_residual_divide_flag is set to 1 and ptn_numbits_divide_flag is set to 0), it is determined that the coding mode common to the to-be-coded point in the K directions is the first coding mode. When the residual division flag field is set to the reference value and the number-of-occupied-bits division flag field is set to the target value (for example, when ptn_residual_divide_flag is set to 0 and ptn_numbits_divide_flag is set to 1), it is determined that the coding mode common to the to-be-coded point in the K directions is the second coding mode. When the residual division flag field and the number-of-occupied-bits division flag field are both set to the reference values (for example, when ptn_residual_divide_flag and ptn_numbits_divide_flag are both set to 0), it is determined that the coding mode common to the to-be-coded point in the K directions is the fourth coding mode.

(3) The coder side sets a decision threshold to decide the coding modes. In some embodiments, the coding data includes a decision threshold, the decision threshold being set by default by the coder side and the decoder side, or the decision threshold being written in the coding parameter set or the coded bitstream of the point cloud. In this case, mode decision information is obtained, and the coding modes of the to-be-coded point in the K directions are decided based on the mode decision information and the decision threshold.

① The decision threshold includes a coded-information threshold, and the mode decision information includes to-be-coded information of the to-be-coded point in the K directions. In this case, the deciding the coding modes of the to-be-coded point in the K directions based on the mode decision information and the decision threshold includes: when a same coding mode is used for the to-be-coded point in the K directions, determining statistical characteristic information of the to-be-coded information of the to-be-coded point in the K directions, and determining a coding mode common to the to-be-coded point in the K directions based on a magnitude relationship between the statistical characteristic information and the coded-information threshold. The statistical characteristic information includes any one of an average value of the to-be-coded information of the to-be-coded point in the K directions, a minimum value of the to-be-coded information of the to-be-coded point in the K directions, and a maximum value of the to-be-coded information of the to-be-coded point in the K directions.

In some embodiments, the coded-information threshold includes a residual threshold ($t1$, $t1>0$), and the to-be-coded information includes a residual value. Statistical characteristic information of residual values of the to-be-coded point in the K directions is determined, and a coding mode common to the to-be-coded point in the K directions is determined based on a magnitude relationship between the statistical characteristic information and the residual threshold. In some embodiments, when the statistical characteristic information is greater than the residual threshold, it is determined that the coding mode common to the to-be-coded point in the K directions is the first coding mode. When the statistical characteristic information is less than or equal to the residual threshold, it is determined that the coding mode common to the to-be-coded point in the K directions is the fourth coding mode.

In some embodiments, the coded-information threshold includes a number-of-occupied-bits threshold ($t2$, $t2>0$), and the to-be-coded information includes a number of occupied bits of the residual value. Statistical characteristic information of numbers of occupied bits of the residual values of the to-be-coded point in the K directions is determined, and a coding mode common to the to-be-coded point in the K directions is determined based on a magnitude relationship between the statistical characteristic information and the number-of-occupied-bits threshold. In some embodiments, when the statistical characteristic information is greater than the number-of-occupied-bits threshold, it is determined that the coding mode common to the to-be-coded point in the K directions is the second coding mode. When the statistical characteristic information is less than or equal to the number-of-occupied-bits threshold, it is determined that the coding mode common to the to-be-coded point in the K directions is the fourth coding mode.

② The decision threshold includes a quantization threshold, the mode decision information includes a QP common to the to-be-coded point in the K directions, and a same coding mode is used for the to-be-coded point in the K directions. In this case, the deciding the coding modes of the to-be-coded point in the K directions based on the mode decision information and the decision threshold includes: determining a coding mode common to the to-be-coded point in the K directions based on a magnitude relationship between the QP and the quantization threshold.

In some embodiments, the quantization threshold includes a first quantization threshold ($t3$, $t3>0$). If the QP is less than the first quantization threshold, it is determined that the coding mode common to the to-be-coded point in the K directions is any one of the first coding mode, the second coding mode, or the third coding mode. If the QP is greater than or equal to the first quantization threshold, it is determined that the coding mode common to the to-be-coded point in the K directions is the fourth coding mode.

In some embodiments, the quantization threshold includes a second quantization threshold ($t4$, $t4>0$). If the QP is greater than the second quantization threshold, it is determined that the coding mode common to the to-be-coded point in the K directions is any one of the first coding mode, the second coding mode, or the third coding mode. If the QP is less than or equal to the second quantization threshold, it is determined that the coding mode common to the to-be-coded point in the K directions is the fourth coding mode.

In some embodiments, the quantization threshold includes a first quantization threshold ($t3$, $t3>0$) and a second quantization threshold ($t4$, $t4>0$), the second quantization threshold being less than the first quantization threshold. If the QP is greater than the second quantization threshold and is less than the first quantization threshold, it is determined that the coding mode common to the to-be-coded point in the K directions is any one of the first coding mode, the second coding mode, or the third coding mode. If the QP is less than or equal to the second quantization threshold or is greater than or equal to the first quantization threshold, it is determined that the coding mode common to the to-be-coded point in the K directions is the fourth coding mode.

③ The decision threshold includes a bounding box threshold ($t5$), the mode decision information includes a bounding box size of a prediction tree of the point cloud, and the bounding box size includes sizes in the K directions. In this case, the deciding the coding modes of the to-be-coded point in the K directions based on the mode decision information and the decision threshold includes: when a same coding mode is used for the to-be-coded point in the K directions, determining a target size feature value based on the sizes in the K directions, and determining a coding mode common to the to-be-coded point in the K directions based on a magnitude relationship between the target size feature value and the bounding box threshold. The target size feature value is a ratio between sizes in any two of the K directions. For example, the bounding box size includes sizes in three directions: an x-direction size $BoundingBoxSize_x$, a y-direction size $BoundingBoxSize_y$, and a z-direction size $BoundingBoxSize_z$, and the target size feature value is a ratio ($BoundingBoxSize_x/BoundingBoxSize_z$) between the x-direction size $BoundingBoxSize_x$ and the z-direction size $BoundingBoxSize_z$.

The coding modes determined by setting the decision threshold are written in a form of the mode setting information in the coding parameter set of the point cloud or the coded bitstream of the point cloud.

When different coding modes are used for the to-be-coded point in the K directions, the determining coding modes of a to-be-coded point in the point cloud in K directions based on the coding data of the point cloud includes but is not limited to any one of the following:

(1) The coder side and the decoder side consider by default that different coding modes are used in the K directions. In some embodiments, the coding data includes default setting information, the default setting information being set by default by the decoder side and the coder side. In this case, based on the default setting information, it is determined that a default coding mode is used for the to-be-coded point in the K directions. If the default setting information indicates that the coding modes in the K directions are different, different default coding modes are used for the to-be-coded point in different directions of the K directions. In some embodiments, the default setting information further indicates a default coding mode. For example, the default setting information indicates that the coding modes in the K directions (for example, the x-direction, the y-direction, and the z-direction) are different, and a coding mode of the to-be-coded point in the x-direction is the first coding mode, a coding mode of the to-be-coded point in the y-direction is the second coding mode, and a coding mode of the to-be-coded point in the z-direction is the third coding mode.

(2) The coder side sets mode setting information to determine the coding modes, the mode setting information being written in the coding parameter set or the coded bitstream of the point cloud. In some embodiments, the coding data includes mode setting information. In this case, if the to-be-coded point has one piece of mode setting information in each of the K directions, it is determined that different coding modes are used for the to-be-coded point in the K directions, and a coding mode of the to-be-coded point in each direction is determined based on the mode setting information of the to-be-coded point in each direction.

A $k^{th}$ direction of the K directions is used as an example. Mode setting information of the to-be-coded point in the $k^{th}$ direction includes either or both of a residual division flag field (ptn_residual_divide_flag[k]) and a number-of-occupied-bits division flag field (ptn_numbits_divide_flag[k]), k being a positive integer less than or equal to K. The determining a coding mode of the to-be-coded point in each direction based on the mode setting information of the to-be-coded point in each direction includes:

① When the mode setting information includes the residual division flag field, and the residual division flag field of the to-be-coded point in the $k^{th}$ direction is set to a target value (for example, the target value is 1) (for example, when ptn_residual_divide_flag[k] is set to 1), it is determined that a coding mode of the to-be-coded point in the $k^{th}$ direction is the first coding mode. When the residual division flag field of the to-be-coded point in the $k^{th}$ direction is set to a reference value (for example, the reference value is 0) (for example, when ptn_residual_divide_flag[k] is set to 0), it is determined that the coding mode of the to-be-coded point in the $k^{th}$ direction is the fourth coding mode.

② When the mode setting information includes the number-of-occupied-bits division flag field, and the number-of-occupied-bits division flag field of the to-be-coded point in the $k^{th}$ direction is set to the target value (for example, when ptn_numbits_divide_flag[k] is set to 1), it is determined that the coding mode of the to-be-coded point in the $k^{th}$ direction is the second coding mode. When the number-of-occupied-bits division flag field of the to-be-coded point in the $k^{th}$ direction is set to the reference value (for example, when ptn_numbits_divide_flag[k] is set to 0), it is determined that the coding mode of the to-be-coded point in the $k^{th}$ direction is the fourth coding mode.

③ When the mode setting information includes the residual division flag field and the number-of-occupied-bits division flag field, and the residual division flag field and the number-of-occupied-bits division flag field of the to-be-coded point in the $k^{th}$ direction are both set to the target value (for example, when ptn_residual_divide_flag[k] and ptn_numbits_divide_flag[k] are both set to 1), it is determined that the coding mode of the to-be-coded point in the $k^{th}$ direction is the third coding mode. When the residual division flag field of the to-be-coded point in the $k^{th}$ direction is set to the target value and the number-of-occupied-bits division flag field of the to-be-coded point in the $k^{th}$ direction is set to the reference value (for example, when ptn_residual_divide_flag[k] is set to 1 and ptn_numbits_divide_flag[k] is set to 0), it is determined that the coding mode of the to-be-coded point in the $k^{th}$ direction is the first coding mode. When the residual division flag field of the to-be-coded point in the $k^{th}$ direction is set to the reference value and the number-of-occupied-bits division flag field of the to-be-coded point in the $k^{th}$ direction is set to the target value (for example, when ptn_residual_divide_flag[k] is set to 0 and ptn_numbits_divide_flag[k] is set to 1), it is determined that the coding mode of the to-be-coded point in the $k^{th}$ direction is the second coding mode. When the residual division flag field and the number-of-occupied-bits division flag field of the to-be-coded point in the $k^{th}$ direction are both set to the reference value (for example, when ptn_residual_divide_flag[k] and ptn_numbits_divide_flag[k] are both set to 0), it is determined that the coding mode of the to-be-coded point in the $k^{th}$ direction is the fourth coding mode.

(3) The coder side sets a decision threshold to decide the coding modes. In some embodiments, the coding data includes a decision threshold, the decision threshold being set by default by the coder side and the decoder side, or the decision threshold being written in the coding parameter set or the coded bitstream of the point cloud. In this case, mode decision information is obtained, and the coding modes of the to-be-coded point in the K directions are decided based on the mode decision information and the decision threshold.

① The decision threshold includes a coded-information threshold, and the mode decision information includes to-be-coded information of the to-be-coded point in the K directions. In this case, the deciding the coding modes of the to-be-coded point in the K directions based on the mode decision information and the decision threshold includes: when different coding modes are used for the to-be-coded point in the K directions, determining a coding mode of the to-be-coded point in a corresponding direction based on a magnitude relationship between the coded-information threshold and to-be-coded information of the to-be-coded point in each direction.

In some embodiments, the coded-information threshold includes a residual threshold (t1, t1>0). The $k^{th}$ direction of the K directions is used as an example. To-be-coded information of the to-be-coded point in the $k^{th}$ direction includes a residual value. A coding mode of the to-be-coded point in the $k^{th}$ direction is determined based on a magnitude relationship between the residual threshold and the residual value of the to-be-coded point in the $k^{th}$ direction. In some embodiments, when the residual value of the to-be-coded point in the $k^{th}$ direction is greater than the residual threshold, it is determined that the coding mode of the to-be-coded point in the $k^{th}$ direction is the first coding mode. When the residual value of the to-be-coded point in the $k^{th}$ direction is less than or equal to the residual threshold, it is determined that the coding mode of the to-be-coded point in the $k^{th}$ direction is the fourth coding mode.

In some embodiments, the coded-information threshold includes a number-of-occupied-bits threshold (t2, t2>0). The $k^{th}$ direction of the K directions is used as an example. To-be-coded information of the to-be-coded point in the $k^{th}$ direction includes a number of occupied bits of a residual value. A coding mode of the to-be-coded point in the $k^{th}$ direction is determined based on a magnitude relationship between the number-of-occupied-bits threshold and the number of occupied bits of the residual value of the to-be-coded point in the $k^{th}$ direction. In some embodiments, when the number of occupied bits of the residual value of the to-be-coded point in the $k^{th}$ direction is greater than the number-of-occupied-bits threshold, it is determined that the coding mode of the to-be-coded point in the $k^{th}$ direction is the second coding mode. When the number of occupied bits of the residual value of the to-be-coded point in the $k^{th}$ direction is less than or equal to the number-of-occupied-bits threshold, it is determined that the coding mode of the to-be-coded point in the $k^{th}$ direction is the fourth coding mode.

② The decision threshold includes a bounding box threshold (t5), the mode decision information includes a bounding box size of a prediction tree of the point cloud, and the bounding box size includes sizes in the K directions. In this case, the deciding the coding modes of the to-be-coded point in the K directions based on the mode decision information and the decision threshold includes: when different coding modes are used for the to-be-coded point in the K directions, determining a size feature value of each of the K directions based on the sizes in the K directions, and determining a coding mode of the to-be-coded point in a corresponding direction based on a magnitude relationship between the bounding box threshold and the size feature value of each direction. A size feature value of the $k^{th}$ direction is a ratio between a size in the $k^{th}$ direction and a size in another direction (any direction in the K directions except the $k^{th}$ direction). For example, the bounding box size includes sizes in three directions: an x-direction size BoundingBoxSize$_x$, a y-direction size BoundingBoxSize$_y$, and a z-direction size BoundingBoxSize$_z$, and a size feature value of the x-direction is a ratio (BoundingBoxSize$_x$/BoundingBoxSize$_z$) between the x-direction size BoundingBoxSize$_x$ and the z-direction size BoundingBoxSize$_z$.

The coding modes determined by setting the decision threshold are written in a form of the mode setting information in the coding parameter set of the point cloud or the coded bitstream of the point cloud.

S703: Code the to-be-coded point based on the determined coding modes.

After the coding modes of the to-be-coded point in the K directions are determined, the to-be-coded point is coded based on the determined coding modes. Geometric residual information of the to-be-coded point is obtained, the geometric residual information of the to-be-coded point including residual values of the to-be-coded point in the K directions and residual sign information of the to-be-coded point in the K directions. The coding the to-be-coded point based on the determined coding modes includes: coding the residual values of the to-be-coded point in the K directions based on the determined coding modes. In addition to residual value coding for the to-be-coded point in the K directions, residual sign coding also may be performed for the to-be-coded point in the K directions. The geometric residual information of the to-be-coded point includes signed residual values of the to-be-coded point in the K directions, and during coding, unsigned residual values (for example, absolute values of the residual values) of the to-be-coded point in the K directions may be coded separately from the residual sign information.

The geometric residual information of the to-be-coded point is determined based on real geometry information of the to-be-coded point and predicted geometry information of the to-be-coded point. The predicted geometry information of the to-be-coded point is predicted by using a prediction tree. In some embodiments, a prediction tree of the point cloud is configured for reflecting a connection relationship between points in the point cloud and indicating prediction modes (for example, prediction modes in the predictive coding technologies described above) of the points in the point cloud. Prediction is performed for the to-be-coded point based on a prediction mode of the to-be-coded point, to obtain the predicted geometry information of the to-be-coded point.

The $k^{th}$ direction of the K directions is used as an example herein to describe residual value coding processes in different coding modes:

(1) When the coding mode of the to-be-coded point in the $k^{th}$ direction is the first coding mode, the first coding mode being a coding mode of coding the residual value of the to-be-coded point in the $k^{th}$ direction after-remainder calculation, a residual value coding process in the first coding mode includes as follows: performing remainder calculation on the residual value A[k] (A[k]=A1[k]$\times$d+A2[k]) of the to-be-coded point in the $k^{th}$ direction, to obtain a residual quotient A1[k] and a residual remainder A2[k]; determining a number B[k] of occupied bits of the residual quotient A1[k], representing the number B[k] of occupied bits by using a number-of-occupied-bits field (for example, ptn_residual_numbits[k]) of the to-be-coded point in the $k^{th}$ direction, and coding the number-of-occupied-bits field; representing the residual remainder A2[k] by using a residual remainder field (namely, ptn_residual_abs_remaining [k]) of the to-be-coded point in the $k^{th}$ direction, and coding the residual remainder field; and representing, by using B[k] bit elements in a bit value field (for example., B[k] bit elements of ptn_residual_value_per[k]) of the to-be-coded point in the $k^{th}$ direction, a value of each of the B[k] bits occupied by the residual quotient A1[k], and coding the B[k] bit elements in the bit value field, d representing a divisor in-remainder calculation, for example, if the remainder calculation is performing division by 2 and obtaining a remainder, d=2. In this manner, the residual value is coded as an after-remainder calculation, instead of directly coding the residual value, which can reduce the volume of coded data, thereby further improving the geometry coding efficiency of the point cloud.

(2) When the coding mode of the to-be-coded point in the $k^{th}$ direction is the second coding mode, the second coding mode being a coding mode of coding the number of occupied bits of the residual value of the to-be-coded point in the $k^{th}$ direction after-remainder calculation, a residual value coding process in the second coding mode includes as follows: determining the number B[k] of occupied bits of the residual value A[k] of the to-be-coded point in the $k^{th}$ direction; performing remainder calculation on the number B[k] (B[k]=B1[k]$\times$d+B2[k]) of occupied bits, to obtain a number-of-occupied-bits quotient B1[k] and a number-of-occupied-bits remainder B2[k]; representing the number-of-occupied-bits quotient B 1[k] by using a number-of-occupied-bits field (for example, ptn_residual_numbits[k]) of the to-be-coded point in the $k^{th}$ direction, and coding the number-of-occupied-bits field; representing the number-of-occupied-bits remainder B2[k] by using a number-of-occupied-bits remainder field (namely, ptn_numbits_remaining [k]) of the to-be-coded point in the $k^{th}$ direction, and coding the number-of-occupied-bits remainder field; and representing, by using B[k] bit elements in a bit value field (for example, B[k] bit elements of ptn_residual_value_per[k]) of the to-be-coded point in the $k^{th}$ direction, a value of each of the B[k] bits occupied by the residual value A [k] of the to-be-coded point in the $k^{th}$ direction, and coding the B[k] bit elements in the bit value field, d representing a divisor in-remainder calculation, for example, if the remainder calculation is performing division by 2 and obtaining a remainder, d=2. In this manner, the number of occupied bits of the residual value is coded as an after-remainder calculation, instead of directly coding the residual value, which can reduce the volume of coded data, thereby further improving the geometry coding efficiency of the point cloud.

(3) When the coding mode of the to-be-coded point in the $k^{th}$ direction is the third coding mode, the third coding mode being a coding mode of performing remainder calculation on the residual value of the to-be-coded point in the $k^{th}$ direction, then performing remainder calculation on a number of occupied bits of a remainder calculation result, and then performing coding, a residual value coding process in the third coding mode includes as follows: performing remainder calculation on the residual value A[k] (A[k]=A1[k]$\times$d+A2[k]) of the to-be-coded point in the $k^{th}$ direction, to obtain a residual quotient A1[k] and a residual remainder A2[k]; representing the residual remainder A2[k] by using a residual remainder field (for example, ptn_residual_abs_remaining[k]) of the to-be-coded point in the $k^{th}$ direction, and coding the residual remainder field; and performing remainder calculation on the number B[k] (B[k]=B1[k]$\times$d+B2

[k]) of occupied bits of the residual quotient A1[k], to obtain a number-of-occupied-bits quotient B1[k] and a number-of-occupied-bits remainder B2[k]; representing the number-of-occupied-bits quotient B1[k] by using a number-of-occupied-bits field (for example, ptn_residual_numbits[k]) of the to-be-coded point in the $k^{th}$ direction, and coding the number-of-occupied-bits field; representing the number-of-occupied-bits remainder B2[k] by using a number-of-occupied-bits remainder field (for example, ptn_numbits_remaining[k]) of the to-be-coded point in the $k^{th}$ direction, and coding the number-of-occupied-bits remainder field; and representing, by using B[k] bit elements in a bit value field (for example, B[k] bit elements of ptn_residual_value_per[k]) of the to-be-coded point in the $k^{th}$ direction, a value of each of the B[k] bits occupied by the residual quotient A1[k], and coding the B[k] bit elements in the bit value field. In this manner, after-remainder calculation is performed on the residual value, remainder calculation is performed on the number of occupied bits of the remainder calculation result, and then coding is performed, instead of directly coding the residual value, which can reduce the volume of coded data, thereby further improving the geometry coding efficiency of the point cloud.

(4) When the coding mode of the to-be-coded point in the $k^{th}$ direction is the fourth coding mode, the fourth coding mode being a coding mode of directly coding the residual value of the to-be-coded point in the $k^{th}$ direction without remainder calculation, a residual value coding process in the fourth coding mode includes as follows: determining a number B[k] of occupied bits of the residual value A[k] of the to-be-coded point in the $k^{th}$ direction; representing the number B[k] of occupied bits by using a number-of-occupied-bits field (for example, ptn_residual _numbits[k]) of the to-be-coded point in the $k^{th}$ direction, and coding the number-of-occupied-bits field; and representing, by using B[k] bit elements in a bit value field (for example, B[k] bit elements of ptn_residual_value_per[k]) of the to-be-coded point in the $k^{th}$ direction, a value of each of the B[k] bits occupied by the residual value A[k] of the to-be-coded point in the $k^{th}$ direction, and coding the B[k] bit elements in the bit value field.

After the residual value coding processes are described, residual sign information coding processes are described herein. The performing residual sign coding for the to-be-coded point in the K directions includes any one of the following manners:

(1) Sign information in the K directions is directly coded. In some embodiments, the residual sign information of the to-be-coded point in the K directions is coded.

(2) Sign indication information is set, and a sign association relationship with a previous point is determined. In some embodiments, sign indication information is set, the sign indication information being set by default by the coder side and the decoder side, or the sign indication information being written in the coding parameter set or the coded bitstream of the point cloud. A sign association relationship between the to-be-coded point and a previous point of the to-be-coded point is determined based on a set value of the sign indication information. For example, when the value of the sign indication information is a target value (for example, the target value is 1) (for example, when signFlag=1), it is determined that there is a sign association relationship between the to-be-coded point and the previous point of the to-be-coded point. When the value of the sign indication information is a reference value (for example, the reference value is 0) (for example, when signFlag=0), it is determined that there is no sign association relationship between the to-be-coded point and the previous point of the to-be-coded point. If there is a sign association relationship between the to-be-coded point and the previous point of the to-be-coded point, the residual sign coding of the to-be-coded point in the K directions is determined based on residual sign coding of the previous point of the to-be-coded point in the K directions. For example, the residual sign coding of the to-be-coded point in the K directions is the same as the residual sign coding of the previous point of the to-be-coded point in the K directions. If there is no sign association relationship between the to-be-coded point and the previous point of the to-be-coded point, the residual sign information of the to-be-coded point in the K directions is coded.

The coding the residual sign information of the to-be-coded point in the K directions includes any one of the following:

First: The residual sign information of the to-be-coded point in the K directions is directly coded. In some embodiments, the residual sign information of the to-be-coded point in the K directions is respectively represented by using ptn_residual_sign_flag of the to-be-coded point in the K directions, and ptn_residual_sign_flag of the to-be-coded point in the K directions is coded.

Second: The residual sign information of the to-be-coded point in the K directions is coded by using K2 context models. In some embodiments, the residual sign information of the to-be-coded point in the K directions is respectively represented by using ptn_residual_sign_flag of the to-be-coded point in the K directions, and ptn_residual_sign_flag of the to-be-coded point in the K directions is coded by using K2 context models.

Third:

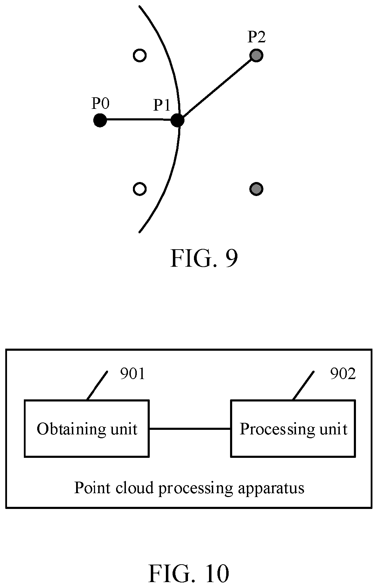

① Signs (for example, residual sign information) of the absolute values of the residual values (for example, unsigned residual values) are traversed to obtain feasible signs. As shown in FIG. 9, assuming that P0 is a parent node, P1 is a current point, and P2 is the to-be-coded point, after an absolute value of a residual value between P2 and P1 is coded, there are four places for a position of P2: two white points and two gray points. The two white points are non-feasible, and are directly excluded, while signs corresponding to the two gray points are feasible.

② The feasible signs are re-numbered, and a total number P of all the feasible signs is recorded. Assuming that the signs of the residual values are (1, 1, 0), and the excluded non-feasible signs are (0, 0, 0) and (0, 0, 1), a re-numbering result is shown in the following table, X in the table representing a non-feasible sign, a number to be coded after the re-numbering is 4, and P=5:

| 000 | 001 | 010 | 011 | 100 | 101 | 110 | 111 |
|-----|-----|-----|-----|-----|-----|-----|-----|
| X | X | 0 | 1 | 2 | 3 | 4 | 5 |

③ Binary bits of a number corresponding to the residual values are coded from a most significant bit to a least significant bit. When an $i^{th}$ bit is coded, it is assumed that the $i^{th}$ bit is 1 and a remaining uncoded bit is 0, and a value of a currently formed decimal number is denoted as D. If D>P, the bit cannot be 1, and may not be coded. Otherwise, context-based arithmetic coding is performed on the $i^{th}$ bit.

Using the case in the foregoing table as an example: the number to be coded is 4, and it is known that P=5, a coding process is as follows: The number to be coded is converted to a binary representation 4=100. When the first bit of 100 is coded, if the bit is 1, D=100=4 is less than P, and the first bit is context coded. When the second bit of 100 is coded, if the bit is 1, D=110=6 is greater than P, and, the second bit is 0, and may not be coded.

The coding the residual sign information of the to-be-coded point in the K directions includes: representing the residual sign information of the to-be-coded point in the K directions by using K residual sign fields (for example, ptn_residual_sign_flag), and coding the K residual sign fields.

A coding process in some embodiments of this application is performed by using a context model.

(1) K1 context models ctx_residual_eq0[k] (k=1, 2, ..., K1) are designed to code ptn_residual_eq0_flag (for example, the residual sign fields) of the to-be-coded point in the K directions. K1 is a positive integer less than or equal to K. When K1 is equal to K, it indicates that context models used in different directions are independent of each other. For example, ptn_residual_eq0_flag in the x-direction, the y-direction, and the z-direction is coded by using three context models (a first context model, a second context model, and a third context model), the x-direction is associated with the first context model, the y-direction is associated with the second context model, and the z-direction is associated with the third context model. When K1<K, it indicates that context models used in different directions are correlated. For example, ptn_residual_eq0_flag in the x-direction, the y-direction, and the z-direction is coded by using two context models (a first context model and a second context model), the x-direction and the y-direction are associated with the first context model, and the z-direction is associated with the second context model.

(2) K2 context models ctx_residual_sign[k] (k=1, 2, ..., K2) are designed to code ptn_residual_sign_flag of the to-be-coded point in the K directions. K2 is a positive integer less than or equal to K. When K2 is equal to K, it indicates that context models used in different directions are independent of each other. When K2<K, it indicates that context models used in different directions are correlated.

(3) B[k] bit elements in bit value fields of the to-be-coded point in the K directions are coded by using K3×N context models ctxNumBits[k][N] (k=1, 2, ..., K3). K3 is a positive integer less than or equal to K, and N is a positive integer greater than or equal to B[k]. Similarly, when K3 is equal to K, it indicates that context model groups (including N context models) used in different directions are independent of each other. When K3<K, it indicates that context model groups (including N context models) used in different directions are correlated. The $k^{th}$ direction of the K directions is used as an example. Coding the B[k] bit elements in the bit value field of the to-be-coded point in the $k^{th}$ direction by using N context models includes any one of the following cases:

① The B[k] bit elements are coded by using N independent context models, N being equal to B[k]. A context model used to code each of the B[k] bit elements is independently selected from the N context models. For example, assuming that B[k]=5, and 5 bit elements are represented as b4, b3, b2, b1, and b0, b4 is coded by using a first context model, b3 is coded by using a second context model, b2 is coded by using a third context model, b1 is coded by using a fourth context model, and b0 is coded by using a fifth context model.

② The B[k] bit elements are coded by using N fully-correlated context models, N being greater than B[k]. A context model used to code an $a^{th}$ bit element of the B[k] bit elements is selected from the N context models depending on a-1 bit elements before the $a^{th}$ bit element, a being a positive integer less than or equal to B[k]. For example, assuming B[k]=5, and 5 bit elements are represented as b4, b3, b2, b1, and b0, coding the 5 bit elements by using N fully-correlated context models may be represented as follows:

$$ctxIdx=0 \text{ for } b0;$$

$$ctxIdx=1+b0 \text{ for } b1;$$

$$ctxIdx=3+b1b0 \text{ for } b2;$$

$$ctxIdx=7+b2b1b0 \text{ for } b3;$$

and

$$ctxIdx=15+b3b2b1b0 \text{ for } b4.$$

ctxIdx=0 for b0 indicates that b0 is coded by using a context model numbered 0 in the N context models. ctxIdx=1+b0 for b1 indicates that a context model used to code b1 is selected depending on b0, or, b1 is coded by using a context model numbered 1+b0 in the N context models. b4, b3, and b2 are similar to b1, and details are not described herein again.

③ The B[k] bit elements are coded by using N partially-correlated context models, N being greater than B[k]. A context model used to code an (a1)$^{th}$ bit element of the B[k] bit elements is selected from the N context models depending on an element before the (a1)$^{th}$ bit element, and a context model used to code an (a2)$^{th}$ bit element of the B[k] bit elements is independently selected from the N context models, both a1 and a2 being positive integers less than or equal to B[k], and a1 being not equal to a2. For example, assuming B[k]=5, and 5 bit elements are represented as b4, b3, b2, b1, and b0, coding the 5 bit elements by using N partially-correlated context models may be represented as follows:

$$ctxIdx=0 \text{ for } b0;$$

$$ctxIdx=1+b0 \text{ for } b1;$$

$$ctxIdx=3+b1b0 \text{ for } b2;$$

$$ctxIdx=7 \text{ for } b3;$$

and

$$ctxIdx=8 \text{ for } b4.$$

ctxIdx=0 for b0 indicates that b0 is coded by using a context model numbered 0 in the N context models. b4 and b3 are similar to b0, and details are not described herein again. ctxIdx=1+b0 for b1 indicates that a context model used to code b1 is selected depending on b0, or, b1 is coded by using a context model numbered 1+b0 in the N context models. b2 is similar to b1, and details are not described herein again.

(4) K4 context models are designed to code residual remainder fields (ptn_residual_abs_remaining) of the to-be-coded point in the K directions. When the coding modes of the to-be-coded point in the K directions are the first coding mode or the third coding mode, ptn_residual_abs_remaining is involved in the coding process, and ptn_residual_abs_remaining of the to-be-coded point in the K directions is coded by using K4 context models. K4 is a positive integer less than or equal to K. When K4 is equal to K, it indicates that context models used in different directions are independent of each other. When K4<K, it indicates that context models used in different directions are correlated.

(5) K5 context models are designed to code number-of-occupied-bits remainder fields (ptn_numbits_remaining) of the to-be-coded point in the K directions. When the coding modes of the to-be-coded point in the K directions are the second coding mode or the third coding mode, ptn_numbits_remaining is involved in the coding process, and ptn_numbits_remaining of the to-be-coded point in the K directions is coded by using K5 context models. K5 is a positive integer less than or equal to K. When K5 is equal to K, it indicates that context models used in different directions are independent of each other. When K5<K, it indicates that context models used in different directions are correlated.

In some embodiments of this application, when a to-be-coded point in a point cloud may be coded, coding data of the point cloud is set, a coding mode of the to-be-coded point in the point cloud in each direction is determined based on the coding data, and the to-be-coded point is coded based on the determined coding mode. In some embodiments of this application, a proper coding mode is determined for each direction of the to-be-coded point for coding by using the coding data, thereby improving geometry coding efficiency of the point cloud. In addition, a residual value and/or a number of occupied bits of the residual value is coded after-remainder calculation, which reduces the volume of coded data, thereby further improving the geometry coding efficiency of the point cloud.

After the point cloud processing solution provided in some embodiments of this application is described in detail, syntax tables corresponding to different coding modes are described herein. A syntax table of the first coding mode is shown in Table 1 below:

Table 1

| geometry_predtree_node(nodeIdx) { |
|---|
| for( k = 0; k < 3; k++ ) { |
| ptn_residual_eq0_flag[k] |
| if( !ptn_residual_eq0_flag[k] ) { |
| ptn_residual_sign_flag[k] |
| ptn_residual_abs_remaining[k] |
| ptn_residual_numbits[k] |
| for(j=0; j< ptn_residual_numbits[k];j++){ |
| ptn_residual_value_per[k][j] |
| } |
| } |
| } |
| } |

A syntax table of the second coding mode is shown in Table 2 below:

Table 2

| geometry_predtree_node(nodeIdx) { |
|---|
| for( k = 0; k < 3; k++ ) { |
| ptn _residual_eq0_flag[k] |
| if( !ptn_residual_eq0_flag[k] ) { |
| ptn_residual_sign_flag[k] |
| ptn_residual_numbits[k] |
| ptn_numbits_remaining[k] |
| for(j=0; j< ptn_residual_numbits[k]×d+ ptn_numbits_remaining[k],j++){ |
| ptn_residual_value_per[k][j] |
| } |
| } |
| } |

(continued)

| |
|---|
| } |

A syntax table of the third coding mode is shown in Table 3 below:

Table 3

| |
|---|
| geometry_predtree_node(nodeIdx) { |
| for( k = 0; k < 3; k++ ) { |
| ptn_residual_eq0_flag[k] |
| if( !ptn_residual_eq0_flag[k] ) { |
| ptn_residual_sign_flag[k] |
| ptn_residual_abs_remaining[k] |
| ptn_residual_numbits[k] |
| ptn_numbits_remaining[k] |
| for(j=0; j< ptn_residual_numbits[k]×d+ ptn_numbits_remaining[k],j++){ |
| ptn_residual_value_per[k][j] |
| } |
| } |
| } |
| } |

A syntax table of the fourth coding mode is shown in Table 4 below:

Table 4

| |
|---|
| geometry_predtree_node(nodeIdx) { |
| for( k = 0; k < 3; k++ ) { |
| ptn_residual_eq0_flag[k] |
| if( !ptn_residual_eq0_flag[k] ) { |
| ptn_residual_sign_flag[k] |
| ptn_residual_numbits[k] |
| for(j=0; j< ptn_residual_numbits[k];j++){ |
| ptn_residual_value_per[k][j] |
| } |
| } |
| } |
| } |

Table 1 to Table 4 are described herein:

nodeIdx: Indicate a current to-be-coded point in the point cloud.

k: Indicate a $k^{th}$ direction of the to-be-coded point.

ptn_residual_eq0_flag (a residual value indication field): Indicate whether a current residual value (for example, a residual value in the $k^{th}$ direction) is 0. When the field is set to 0, it indicates that the current residual value is 0. When the field is set to 1, it indicates that the current residual value is a non-0 value. The field is present in four coding modes (for example, the first coding mode, the second coding mode, the third coding mode, and the fourth coding mode).

ptn_residual_sign_flag (a residual sign field): Indicate a sign of the current residual value. When the field is set to 0, it indicates that the current residual value is a negative number. When the field is set to 1, it indicates that the current residual value is a non-negative number. The field is present in four coding modes (for example, the first coding mode, the second coding mode, the third coding mode, and the fourth coding mode).

Ptn_residual_abs_remaining (a residual remainder field): Indicate a remainder value (for example, a residual remainder) obtained after-remainder calculation (for example, performing division by 2 and obtaining a remainder) is performed on the current residual value. The value is 0 or 1. The field is present in the first coding mode and the third coding mode.

ptn_residual_numbits field (a number-of-occupied-bits field): Indicate a number of bits occupied by a current to-be-coded value, the current to-be-coded value being the current residual value or a quotient value obtained after-remainder calculation (for example, performing division by 2 and obtaining a remainder) is performed on the current residual value. The field is present in four coding modes (for example, the first coding mode, the second coding mode, the third coding mode, and the fourth coding mode).

ptn_numbits_remaining (a number-of-occupied-bits remainder field): Indicate a remainder value (for example, a number-of-occupied-bits remainder) obtained after-remainder calculation (for example, performing division by 2 and obtaining a remainder) is performed on the number of occupied bits. The value is 0 or 1. The field is present in the second coding mode and the third coding mode.

ptn_residual_value_per (a bit value field): Indicate a value of each bit in the number of occupied bits. The field is present in four coding modes (for example, the first coding mode, the second coding mode, the third coding mode, and the fourth coding mode).

The method in some embodiments of this application is described in detail above. To better implement the solution in some embodiments of this application, the following provides an apparatus according to some embodiments of the present appplication.

FIG. 10 is a diagram of a structure of a point cloud processing apparatus according to some embodiments of this application. The point cloud processing apparatus is disposed in a computer device provided in some embodiments of this application, the computer device being the decoding device in the foregoing method embodiments. The point cloud processing apparatus shown in FIG. 10 is a computer program (including program code) running in the computer device, and the point cloud processing apparatus is configured to perform some or all operations of the method according to some embodiments shown in FIG. 7. With reference to FIG. 10, the point cloud processing apparatus includes the following units:

an obtaining unit 901, configured to obtain coding data of a point cloud; and

a processing unit 902, configured to determine coding modes of a to-be-decoded point in the point cloud in K directions based on the coding data, K being a positive integer; and decode the to-be-decoded point based on the determined coding modes.

In some embodiments, the coding data includes default setting information, the default setting information being set by default by a decoder side and a coder side; and the processing unit 902 is further configured to: determine, based on the default setting information, that a default coding mode is used for the to-be-decoded point in the K directions; if the default setting information indicates that the coding modes in the K directions are the same, a same default coding mode being used for the to-be-decoded point in all of the K directions; or if the default setting information indicates that the coding modes in the K directions are different, different default coding modes being used for the to-be-decoded point in different directions of the K directions.

In some embodiments, the coding data includes mode setting information, the mode setting information being parsed out from a coding parameter set of the point cloud or a coded bitstream of the point cloud; and the processing unit 902 is further configured to: if the mode setting information is common to the to-be-decoded point in the K directions, determine that a same coding mode is used for the to-be-decoded point in the K directions, and determine a coding mode common to the to-be-decoded point in the K directions based on the mode setting information common to the to-be-decoded point in the K directions; or if the to-be-decoded point has one piece of mode setting information in each of the K directions, determine that different coding modes are used for the to-be-decoded point in the K directions, and determine a coding mode of the to-be-decoded point in each direction based on the mode setting information of the to-be-decoded point in each direction.

In some embodiments, the mode setting information includes either or both of a residual division flag field and a number-of-occupied-bits division flag field; and the processing unit 902 is further configured to: when the mode setting information includes the residual division flag field, and a value of the residual division flag field is a target value, determine that the coding mode common to the to-be-decoded point in the K directions is a first coding mode; when the mode setting information includes the number-of-occupied-bits division flag field, and a value of the number-of-occupied-bits division flag field is the target value, determine that the coding mode common to the to-be-decoded point in the K directions is a second coding mode; or when the mode setting information includes the residual division flag field and the number-of-occupied-bits division flag field, and values of the residual division flag field and the number-of-occupied-bits division flag field are both the target value, determine that the coding mode common to the to-be-decoded point in the K directions is a third coding mode.

In some embodiments, the coding data includes a decision threshold, the decision threshold being set by default by a decoder side and a coder side, or the decision threshold being parsed out from a coded bitstream of the point cloud; and the processing unit 902 is further configured to: parse out mode decision information from the coded bitstream of the point cloud; and decide the coding modes of the to-be-decoded point in the K directions based on the mode decision information and the decision threshold.

In some embodiments, the decision threshold includes a quantization threshold, the mode decision information includes a QP common to the to-be-decoded point in the K directions, and a same coding mode is used for the to-be-decoded point in the K directions; and the processing unit 902 is further configured to: determine a coding mode common to the to-be-decoded point in the K directions based on a magnitude relationship between the QP and the quantization threshold.

In some embodiments, the quantization threshold includes either or both of a first quantization threshold and a second quantization threshold; and the processing unit 902 is further configured to: when the quantization threshold includes the first quantization threshold, if the QP is less than the first quantization threshold, determine that the coding mode common to the to-be-decoded point in the K directions is any one of a first coding mode, a second coding mode, or a third coding mode; when the quantization threshold includes the second quantization threshold, if the QP is greater than the second quantization threshold, determine that the coding mode common to the to-be-decoded point in the K directions is any one of the first coding mode, the second coding mode, or the third coding mode; or when the quantization threshold includes the first quantization threshold and the second quantization threshold, if the QP is greater than the second quantization threshold and is less than the first quantization threshold, determine that the coding mode common to the to-be-decoded point in the K directions is any one of the first coding mode, the second coding mode, or the third coding mode.

In some embodiments, the decision threshold includes a coding parsing threshold, the mode decision information includes coding parsing information of the to-be-decoded point in the K directions, and the coding parsing information includes residual parsing information or number-of-occupied-bits parsing information; and the processing unit 902 is further configured to: when a same coding mode is used for the to-be-decoded point in the K directions, determine statistical characteristic information of the coding parsing information of the to-be-decoded point in the K directions, and determine a coding mode common to the to-be-decoded point in the K directions based on a magnitude relationship between the statistical characteristic information and the coding parsing threshold; or when different coding modes are used for the to-be-decoded point in the K directions, determine a coding mode of the to-be-decoded point in each direction based on a magnitude relationship between the coding parsing threshold and coding parsing information of the to-be-decoded point in each direction; the statistical characteristic information including any one of an average value of the coding parsing information of the to-be-decoded point in the K directions, a minimum value of the coding parsing information of the to-be-decoded point in the K directions, and a maximum value of the coding parsing information of the to-be-decoded point in the K directions.

In some embodiments, the decision threshold includes a bounding box threshold, the mode decision information includes a bounding box size of a prediction tree of the point cloud, and the bounding box size includes sizes in the K directions; and the processing unit 902 is further configured to: when a same coding mode is used for the to-be-decoded point in the K directions, determine a target size feature value based on the sizes in the K directions, and determine a coding mode common to the to-be-decoded point in the K directions based on a magnitude relationship between the target size feature value and the bounding box threshold; or when different coding modes are used for the to-be-decoded point in the K directions, determine a size feature value of each of the K directions based on the sizes in the K directions, and determine a coding mode of the to-be-decoded point in a corresponding direction based on a magnitude relationship between the bounding box threshold and the size feature value of each direction.

In some embodiments, the processing unit 902 is further configured to: perform residual value decoding for the to-be-decoded point based on the determined coding modes, to obtain reconstructed residual values of the to-be-decoded point in the K directions.

In some embodiments, for a $k^{th}$ direction of the K directions, a coding mode of the to-be-decoded point in the $k^{th}$ direction is a first coding mode, k being a positive integer less than or equal to K; and the processing unit 902 is further configured to: parse a number-of-occupied-bits field of the to-be-decoded point in the $k^{th}$ direction, to obtain a number B[k] of occupied bits of a residual quotient A1[k] of the to-be-decoded point in the $k^{th}$ direction; parse B[k] bit values in a bit value field of the to-be-decoded point in the $k^{th}$ direction, to obtain the residual quotient A1[k]; parse a residual remainder field of the to-be-decoded point in the $k^{th}$ direction, to obtain a residual remainder A2[k] of the to-be-decoded point in the $k^{th}$ direction; and determine a reconstructed residual value A[k] of the to-be-decoded point in the $k^{th}$ direction based on the residual quotient A1[k] and the residual remainder A2[k].

In some embodiments, for a $k^{th}$ direction of the K directions, a coding mode of the to-be-decoded point in the $k^{th}$ direction is a second coding mode; and the processing unit 902 is further configured to: parse a number-of-occupied-bits field of the to-be-decoded point in the $k^{th}$ direction, to obtain a number-of-occupied-bits quotient B1[k] of the to-be-decoded point in the $k^{th}$ direction; parse a number-of-occupied-bits remainder field of the to-be-decoded point in the $k^{th}$ direction, to obtain a number-of-occupied-bits remainder B2[k] of the to-be-decoded point in the $k^{th}$ direction; determine a number B[k] of occupied bits of a reconstructed residual value A[k] of the to-be-decoded point in the $k^{th}$ direction based on the number-of-occupied-bits quotient B1[k] and the number-of-occupied-bits remainder B2[k]; and parse B[k] bit values in a bit value field of the to-be-decoded point in the $k^{th}$ direction, to obtain the reconstructed residual value A[k] of the to-be-decoded point in the $k^{th}$ direction.

In some embodiments, for a $k^{th}$ direction of the K directions, a coding mode of the to-be-decoded point in the $k^{th}$ direction is a third coding mode; and the processing unit 902 is further configured to: parse a number-of-occupied-bits field of the to-be-decoded point in the $k^{th}$ direction, to obtain a number-of-occupied-bits quotient B1[k] of the to-be-decoded point in the $k^{th}$ direction; parse a number-of-occupied-bits remainder field of the to-be-decoded point in the $k^{th}$ direction, to obtain a number-of-occupied-bits remainder B2[k] of the to-be-decoded point in the $k^{th}$ direction; determine a number B[k] of occupied bits of a residual quotient A1[k] of the to-be-decoded point in the $k^{th}$ direction based on the number-of-occupied-bits quotient B1[k] and the number-of-occupied-bits remainder B2[k]; parse B[k] bit values in a bit value field of the to-be-decoded point in the $k^{th}$ direction, to obtain the residual quotient A1[k]; parse a residual remainder field of the to-be-decoded point in the $k^{th}$ direction, to obtain a residual remainder A2[k] of the to-be-decoded point in the $k^{th}$ direction; and determine a reconstructed residual value A[k] of the to-be-decoded point in the $k^{th}$ direction based on the residual quotient A1[k] and the residual remainder A2[k].

In some embodiments, when the coding modes of the to-be-decoded point in the K directions are the first coding mode or the third coding mode, corresponding residual remainder fields of the to-be-decoded point in the K directions are parsed by using K4 context models, K4 being a positive integer less than or equal to K.

In some embodiments, when the coding modes of the to-be-decoded point in the K directions are the second coding mode or the third coding mode, corresponding number-of-occupied-bits remainder fields of the to-be-decoded point in the K directions are parsed by using K5 context models, K5 being a positive integer less than or equal to K.

In some embodiments, the processing unit 902 is further configured to: parse the B[k] bit values by using N context models, B[k] being a positive integer and N being a positive integer greater than or equal to B[k].

In some embodiments, the processing unit 902 is further configured to: parse the B[k] bit values by using N independent context models, N being equal to B[k]; a context model used to parse each of the B[k] bit values being independently selected from the N context models.

In some embodiments, the processing unit 902 is further configured to: parse the B[k] bit values by using N fully-correlated context models, N being greater than B[k]; a context model used to parse an $a^{th}$ bit value of the B[k] bit values being selected from the N context models depending on parsing results of a-1 bit values before the $a^{th}$ bit value, a being a positive integer less than or equal to B[k].

In some embodiments, the processing unit 902 is further configured to: parse the B[k] bit values by using N partially-correlated context models, N being greater than B[k]; a context model used to parse an $(a1)^{th}$ bit value of the B[k] bit values being selected from the N context models depending on a parsing result of a value before the $(a1)^{th}$ bit value, and a context model used to parse an $(a2)^{th}$ bit value of the B[k] bit values being independently selected from the N context models, both a1 and a2 being positive integers less than or equal to B[k], and a1 being not equal to a2.

In some embodiments, reconstructed residual values of the to-be-decoded point in the K directions are obtained after the to-be-decoded point is decoded based on the determined coding modes; and the processing unit 902 is further configured to: perform residual sign decoding for the to-be-decoded point in each of the K directions, to obtain reconstructed residual sign information of the to-be-decoded point in the K directions; determine reconstructed residual information of the to-be-decoded point based on the reconstructed residual values of the to-be-decoded point in the K directions and the reconstructed residual sign information of the to-be-decoded point in the K directions; and reconstruct geometry information of the to-be-decoded point based on the reconstructed residual information of the to-be-decoded point.

In some embodiments, the processing unit 902 is further configured to: read residual sign coding of the to-be-decoded point in the K directions from a coded bitstream of the point cloud; and parse the residual sign coding of the to-be-decoded point in the K directions, to obtain the reconstructed residual sign information of the to-be-decoded point in the K directions.

In some embodiments, the processing unit 902 is further configured to: obtain sign indication information, the sign indication information being set by default by a coder side and a decoder side, or the sign indication information being parsed out from a coding parameter set or a coded bitstream of the point cloud; determine a sign association relationship between the to-be-decoded point and a previous point of the to-be-decoded point based on a value of the sign indication information; and if there is a sign association relationship between the to-be-decoded point and the previous point of the to-be-decoded point, determine the reconstructed residual sign information of the to-be-decoded point in the K directions based on reconstructed residual sign information of the previous point of the to-be-decoded point in the K directions; or if there is no sign association relationship between the to-be-decoded point and the previous point of the to-be-decoded point, read residual sign coding of the to-be-decoded point in the K directions from a coded bitstream of the point cloud, and parse the residual sign coding of the to-be-decoded point in the K directions, to obtain the reconstructed residual sign information of the to-be-decoded point in the K directions.

In some embodiments, the processing unit 902 is further configured to: parse the residual sign coding of the to-be-decoded point in the K directions by using K2 context models, to obtain the reconstructed residual sign information of the to-be-decoded point in the K directions, K2 being a positive integer less than or equal to K.

In some embodiments, the processing unit 902 is further configured to: obtain predicted geometry information of the to-be-decoded point; and reconstruct the geometry information of the to-be-decoded point based on the reconstructed residual information of the to-be-decoded point and the predicted geometry information of the to-be-decoded point.

According to some embodiments of this application, some or all of the units of the point cloud processing apparatus shown in FIG. 10 are combined into one or more other units, or one (or more) of the units therein are further divided into a plurality of units of smaller functions. Same operations are implemented without affecting implementation of technical effects of some embodiments of this application. The foregoing units may be obtained through division based on logical functions. In application, a function of one unit may be implemented by a plurality of units, or functions of a plurality of units may be implemented by one unit. In some embodiment of this application, the point cloud processing apparatus includes another unit. In application, these functions may be assisted by another unit, and may be cooperatively implemented by a plurality of units.

According to some embodiments of this application, a computer program (including program code) that can perform some or all operations of the method shown in FIG. 7 is run on a general computing device, for example, a computer, including a processing element and a storage element such as a central processing unit (CPU), a random access memory (RAM), and a read-only memory (ROM), to construct the point cloud processing apparatus shown in FIG. 10, and implement the point cloud processing method according to some embodiments of this application. The computer program is recorded in, for example, a computer-readable storage medium, and is loaded into the computer device through the computer-readable storage medium, and run in the computer device.

In some embodiment of this application, when a to-be-decoded point in a point cloud may be decoded, coding data of the point cloud is obtained, a coding mode of the to-be-decoded point in the point cloud in each direction is determined based on the coding data, and the to-be-decoded point is decoded based on the determined coding mode. In some embodiments of this application, a proper coding mode is determined for each direction of the to-be-decoded point for decoding by using the coding data, thereby improving geometry decoding efficiency of the point cloud.

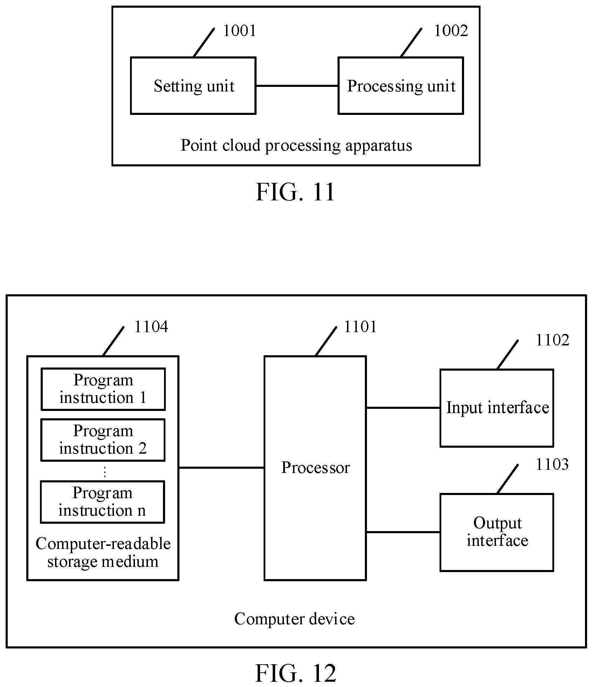

FIG. 11 is a diagram of a structure of another point cloud processing apparatus according to some embodiments of this application. The point cloud processing apparatus is disposed in a computer device provided in some embodiments of this application, the computer device being the coding device in the foregoing method embodiments. The point cloud processing apparatus shown in FIG. 11 is a computer program (including program code) running in the computer device, and the point cloud processing apparatus is configured to perform some or all operations of the method according to some embodiments as shown in FIG. 8. With reference to FIG. 11, the point cloud processing apparatus includes the following units:

a setting unit 1001, configured to set coding data of a point cloud; and

a processing unit 1002, configured to determine coding modes of a to-be-coded point in the point cloud in K directions based on the coding data, K being a positive integer; and code the to-be-coded point based on the determined coding modes.

In some embodiments, the coding data includes default setting information, the default setting information being set by default by a coder side and a decoder side; and the processing unit 1002 is further configured to: determine, based on the default setting information, that a default coding mode is used for the to-be-coded point in the K directions; if the default setting information indicates that the coding modes in the K directions are the same, a same default coding mode being used for the to-be-coded point in all of the K directions; or if the default setting information indicates that the coding modes in the K directions are different, different default coding modes being used for the to-be-coded point in different directions of the K directions.

In some embodiments, the coding data includes mode setting information, the mode setting information being written in a coding parameter set of the point cloud or a coded bitstream of the point cloud; and the processing unit 1002 is further configured to: if the mode setting information is common to the to-be-coded point in the K directions, determine that a same coding mode is used for the to-be-coded point in the K directions, and determine a coding mode common to the to-be-coded point in the K directions based on the mode setting information common to the to-be-coded point in the K directions; or if the to-be-coded point has one piece of mode setting information in each of the K directions, determine that different coding modes are used for the to-be-coded point in the K directions, and determine a coding mode of the to-be-coded point in each direction based on the mode setting information of the to-be-coded point in each direction.

In some embodiments, the mode setting information includes either or both of a residual division flag field and a number-of-occupied-bits division flag field; and the processing unit 1002 is further configured to: when the mode setting information includes the residual division flag field, and the residual division flag field is set to a target value, determine that the coding mode common to the to-be-coded point in the K directions is a first coding mode; when the mode setting information includes the number-of-occupied-bits division flag field, and the number-of-occupied-bits division flag field is set to the target value, determine that the coding mode common to the to-be-coded point in the K directions is a second coding mode; or when the mode setting information includes the residual division flag field and the number-of-occupied-bits division flag field, and the residual division flag field and the number-of-occupied-bits division flag field are both set to the target value, determine that the coding mode common to the to-be-coded point in the K directions is a third coding mode.

In some embodiments, the coding data includes a decision threshold, the decision threshold being set by default by a coder side and a decoder side, or the decision threshold being written in a coding parameter set or a coded bitstream of the point cloud; and the processing unit 1002 is further configured to: obtain mode decision information; and decide the coding modes of the to-be-coded point in the K directions based on the mode decision information and the decision threshold.

In some embodiments, the decision threshold includes a quantization threshold, the mode decision information includes a QP common to the to-be-coded point in the K directions, and a same coding mode is used for the to-be-coded point in the K directions; and the processing unit 1002 is further configured to: determine a coding mode common to the to-be-coded point in the K directions based on a magnitude relationship between the QP and the quantization threshold.

In some embodiments, the quantization threshold includes either or both of a first quantization threshold and a second quantization threshold; and the processing unit 1002 is further configured to: when the quantization threshold includes the first quantization threshold, if the QP is less than the first quantization threshold, determine that the coding mode common to the to-be-coded point in the K directions is any one of a first coding mode, a second coding mode, or a third coding mode; when the quantization threshold includes the second quantization threshold, if the QP is greater than the second quantization threshold, determine that the coding mode common to the to-be-coded point in the K directions is any one of the first coding mode, the second coding mode, or the third coding mode; or when the quantization threshold includes the first quantization threshold and the second quantization threshold, if the QP is greater than the second quantization threshold and is less than the first quantization threshold, determine that the coding mode common to the to-be-coded point in the K directions is any one of the first coding mode, the second coding mode, or the third coding mode.

In some embodiments, the decision threshold includes a coded-information threshold, the mode decision information includes to-be-coded information of the to-be-coded point in the K directions, and the to-be-coded information includes a residual value or a number of occupied bits of the residual value; and the processing unit 1002 is further configured to: when a same coding mode is used for the to-be-coded point in the K directions, determine statistical characteristic information of the to-be-coded information of the to-be-coded point in the K directions, and determine a coding mode common to the to-be-coded point in the K directions based on a magnitude relationship between the statistical characteristic information and the coded-information threshold; or when different coding modes are used for the to-be-coded point in the K directions, determine a coding mode of the to-be-coded point in each direction based on a magnitude relationship between the coded-information threshold and to-be-coded information of the to-be-coded point in each direction; the statistical characteristic information including any one of an average value of the to-be-coded information of the to-be-coded point in the K directions, a minimum value of the to-be-coded information of the to-be-coded point in the K directions, and a maximum value of the to-be-coded information of the to-be-coded point in the K directions.

In some embodiments, the decision threshold includes a bounding box threshold, the mode decision information includes a bounding box size of a prediction tree of the point cloud, and the bounding box size includes sizes in the K directions; and the processing unit 1002 is further configured to: when a same coding mode is used for the to-be-coded point in the K directions, determine a target size feature value based on the sizes in the K directions, and determine a coding mode common to the to-be-coded point in the K directions based on a magnitude relationship between the target size feature value and the bounding box threshold; or when different coding modes are used for the to-be-coded point in the K directions, determine a size feature value of each of the K directions based on the sizes in the K directions, and determine a coding mode of the to-be-coded point in each direction based on a magnitude relationship between the bounding box threshold and the size feature value of each direction.

In some embodiments, the processing unit 1002 is further configured to: obtain geometric residual information of the to-be-coded point, the geometric residual information including residual values of the to-be-coded point in the K directions and residual sign information of the to-be-coded point in the K directions; and code the residual values of the to-be-coded point in the K directions based on the determined coding modes.

In some embodiments, for a $k^{th}$ direction of the K directions, a coding mode of the to-be-coded point in the $k^{th}$ direction is a first coding mode, k being a positive integer less than or equal to K; and the processing unit 1002 is further configured to: perform remainder calculation on a residual value A[k] of the to-be-coded point in the $k^{th}$ direction, to obtain a residual quotient A1[k] and a residual remainder A2[k]; determine a number B[k] of occupied bits of the residual quotient A1[k], represent the number B[k] of occupied bits by using a number-of-occupied-bits field of the to-be-coded point in the $k^{th}$ direction, and code the number-of-occupied-bits field; represent the residual remainder A2[k] by using a residual remainder field of the to-be-coded point in the $k^{th}$ direction, and code the residual remainder field; and represent, by using B[k] bit elements in a bit value field of the to-be-coded point in the $k^{th}$ direction, a value of each of the B[k] bits occupied by the residual quotient A1[k], and code the B[k] bit elements in the bit value field.

In some embodiments, for a $k^{th}$ direction of the K directions, a coding mode of the to-be-coded point in the $k^{th}$ direction is a second coding mode, k being a positive integer less than or equal to K; and the processing unit 1002 is further configured to: determine a number B[k] of occupied bits of a residual value A[k] of the to-be-coded point in the $k^{th}$ direction; perform remainder calculation on the number B[k] of occupied bits, to obtain a number-of-occupied-bits quotient B1[k] and a number-of-occupied-bits remainder B2[k]; represent the number-of-occupied-bits quotient B1[k] by using a number-of-occupied-bits field of the to-be-coded point in the $k^{th}$ direction, and code the number-of-occupied-bits field; represent the number-of-occupied-bits remainder B2[k] by using a number-of-occupied-bits remainder field of the to-be-coded point in the $k^{th}$ direction, and code the number-of-occupied-bits remainder field; and represent, by using B[k] bit elements in a bit value field of the to-be-coded point in the $k^{th}$ direction, a value of each of the B[k] bits occupied by the residual value of the to-be-coded point in the $k^{th}$ direction, and code the B[k] bit elements in the bit value field.

In some embodiments, for a $k^{th}$ direction of the K directions, a coding mode of the to-be-coded point in the $k^{th}$ direction is a third coding mode, k being a positive integer less than or equal to K; and the processing unit 1002 is further configured to: perform remainder calculation on a residual value A[k] of the to-be-coded point in the $k^{th}$ direction, to obtain a residual quotient A1[k] and a residual remainder A2[k]; represent the residual remainder A2[k] by using a residual remainder field of the to-be-coded point in the $k^{th}$ direction, and code the residual remainder field; and perform remainder calculation on a number B[k] of occupied bits of the residual quotient A1[k], to obtain a number-of-occupied-bits quotient B1[k] and a number-of-occupied-bits remainder B2[k]; represent the number-of-occupied-bits quotient B1[k] by using a number-of-occupied-bits field of the to-be-coded point in the $k^{th}$ direction, and code the number-of-occupied-bits field; represent the number-of-occupied-bits remainder B2[k] by using a number-of-occupied-bits remainder field of the to-be-coded point in the $k^{th}$ direction, and code the number-of-occupied-bits remainder field; and represent, by using B[k] bit elements in a bit value field of the to-be-coded point in the $k^{th}$ direction, a value of each of the B[k] bits occupied by the residual quotient A1[k], and code the B[k] bit elements in the bit value field.

In some embodiments, when the coding modes of the to-be-coded point in the K directions are the first coding mode or the third coding mode, residual remainder fields of the to-be-coded point in the K directions are coded by using K4 context models, K4 being a positive integer less than or equal to K.

In some embodiments, when the coding modes of the to-be-coded point in the K directions are the second coding mode or the third coding mode, number-of-occupied-bits remainder fields of the to-be-coded point in the K directions are coded by using K5 context models, K5 being a positive integer less than or equal to K.

In some embodiments, the processing unit 1002 is further configured to: code the B[k] bit elements in the bit value field by using N context models, B[k] being a positive integer and N being a positive integer greater than or equal to B[k].

In some embodiments, the processing unit 1002 is further configured to: code the B[k] bit elements in the bit value field by using N independent context models; a context model used to code each bit element in the bit value field being independently selected from the N context models.

In some embodiments, the processing unit 1002 is further configured to: code the B[k] bit elements in the bit value field by using N fully-correlated context models; a context model used to code an $a^{th}$ bit element in the bit value field being selected from the N context models depending on a-1 bit elements before the $a^{th}$ bit element, a being a positive integer less than or equal to B[k].

In some embodiments, the processing unit 1002 is further configured to: code the B[k] bit elements in the bit value field by using N partially-correlated context models; a context model used to code an $(a1)^{th}$ bit element in the bit value field being selected from the N context models depending on an element before the $(a1)^{th}$ bit element, and a context model used to code an $(a2)^{th}$ bit element in the bit value field being independently selected from the N context models, both a1 and a2 being positive integers less than or equal to B[k], and a1 being not equal to a2.

In some embodiments, the processing unit 1002 is further configured to: obtain predicted geometry information of the to-be-coded point; and determine geometric residual information of the to-be-coded point based on real geometry information of the to-be-coded point and the predicted geometry information of the to-be-coded point.

In some embodiments, the processing unit 1002 is further configured to: perform residual sign coding for the to-be-coded point in the K directions.

In some embodiments, the processing unit 1002 is further configured to: code the residual sign information of the to-be-coded point in the K directions.

In some embodiments the processing unit 1002 is further configured to: set sign indication information, the sign indication information being set by default by a coder side and a decoder side, or the sign indication information being written in a coding parameter set or a coded bitstream of the point cloud; determine a sign association relationship between the to-be-coded point and a previous point of the to-be-coded point based on a set value of the sign indication information; and if there is a sign association relationship between the to-be-coded point and the previous point of the to-be-coded point, determine the residual sign coding of the to-be-coded point in the K directions based on residual sign coding of the previous point of the to-be-coded point in the K directions; or if there is no sign association relationship between the to-be-coded point and the previous point of the to-be-coded point, code residual sign information of the to-be-coded point in the K directions.

In some embodiments, the processing unit 1002 is further configured to: code the residual sign information of the to-be-coded point in the K directions by using K2 context models, K2 being a positive integer less than or equal to K.

According to some embodiments of this application, some or all of the units of the point cloud processing apparatus shown in FIG. 11 are combined into one or more other units, or one (or more) of the units therein are further divided into a plurality of units of smaller functions. In this way, same operations are implemented without affecting implementation of technical effects of some embodiments of this application. The foregoing units may be obtained through division based on logical functions. In application, a function of one unit may be implemented by a plurality of units, or functions of a plurality of units may be implemented by one unit. In some embodiments of this application, the point cloud processing apparatus includes another unit. In application, these functions may be assisted by another unit, and may be cooperatively implemented by a plurality of units.

According to some embodiments of this application, a computer program (including program code) that can perform some or all operations of the method shown in FIG. 8 is run on a general computing device, for example, a computer, including a processing element and a storage element such as a CPU, a RAM, and a ROM, to construct the point cloud processing apparatus shown in FIG. 11, and implement the point cloud processing method according to some embodiments of this application. The computer program is recorded in, for example, a computer-readable storage medium, and is loaded into the computer device through the computer-readable storage medium, and run in the computer device.

In some embodiments of this application, when a to-be-coded point in a point cloud may be coded, coding data of the point cloud is set, a coding mode of the to-be-coded point in the point cloud in each direction is determined based on the coding data, and the to-be-coded point is coded based on the determined coding mode. In some embodiments of this application, a proper coding mode is determined for each direction of the to-be-coded point for coding by using the coding data, thereby improving geometry coding efficiency of the point cloud.

Based on the foregoing method and apparatus embodiments, some embodiments of this application provide a computer device. The computer device is the foregoing decoding device or coding device. FIG. 12 is a diagram of a structure of a computer device according to some embodiments of this application. The computer device shown in FIG. 12 includes at least a processor 1101, an input interface 1102, an output interface 1103, and a computer-readable storage medium 1104. The processor 1101, the input interface 1102, the output interface 1103, and the computer-readable storage medium 1104 may be connected through a bus or in another manner.

The computer-readable storage medium 1104 is stored in a memory of the computer device, the computer-readable storage medium 1104 is configured to store a computer program, the computer program includes a computer instruction, and the processor 1101 is configured to execute the program instruction stored in the computer-readable storage medium 1104. The processor 1101 (or referred to as a CPU) is a computing core and a control core of the computer device, which is configured to implement one or more computer instructions, and specifically configured to load and execute one or more computer instructions to implement a corresponding method flow or corresponding function.

Some embodiments of this application further provide a computer-readable storage medium (memory). The computer-readable storage medium is a memory device in a computer device, and is configured to store a program and data. The computer-readable storage medium herein includes an internal storage medium in the computer device, and may also include an extended storage medium supported by the computer device. The computer-readable storage medium provides a storage space, the storage space storing an operating system of the computer device. Moreover, the storage space further stores one or more computer instructions loaded and executed by a processor. The one or more computer instructions may be one or more computer programs (including program code). The computer-readable storage medium herein is a high-speed RAM, or is a non-volatile memory, for example, at least one magnetic disk storage, or in some embodiments, may be at least one computer-readable storage medium located far away from the processor.

In some embodiments, the one or more computer instructions stored in the computer-readable storage medium 1104 are loaded and executed by the processor 1101 to implement corresponding operations of the point cloud processing method shown in FIG. 7 or FIG. 8. IThe computer instruction in the computer-readable storage medium 1104 is loaded and executed by the processor 1101 to perform the point cloud processing method according to some embodiments.

In addition, a computer program product or a computer program is provided. The computer program product or the computer program includes a computer instruction, the computer instruction being stored in a computer-readable storage medium. A processor of a computer device reads the computer instruction from the computer-readable storage medium, and the processor executes the computer instruction, to cause the computer device to perform the point cloud processing method according to some embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A point cloud processing method, performed by a decoding device, the method comprising:

   obtaining coding data of a point cloud;
   determining coding modes of a to-be-decoded point in the point cloud in K directions based on the coding data, K being a positive integer; and
   decoding the to-be-decoded point based on the determined coding modes.

2. The method according to claim 1, wherein the coding data comprises default setting information, and the default setting information is set by default by a decoder side and a coder side;
   wherein the determining coding modes of a to-be-decoded point in the point cloud in K directions based on the coding data comprises:

   determining, based on the default setting information, that a default coding mode is used for the to-be-decoded point in the K directions;
   in response to that the default setting information indicates that the coding modes in the K directions are the same, using a same default coding mode for the to-be-decoded point in all of the K directions; or
   in response to that the default setting information indicates that the coding modes in the K directions are different, using different default coding modes for the to-be-decoded point in different directions of the K directions.

3. The method according to claim 1, wherein the coding data comprises mode setting information, and the mode setting information is parsed out from a coding parameter set of the point cloud or a coded bitstream of the point cloud;
   wherein the determining coding modes of a to-be-decoded point in the point cloud in K directions based on the coding data comprises:

   in response to that the mode setting information is common to the to-be-decoded point in the K directions, determining that a same coding mode is used for the to-be-decoded point in the K directions, and determining a coding mode common to the to-be-decoded point in the K directions based on the mode setting information common to the to-be-decoded point in the K directions; or
   in response to that the to-be-decoded point has one piece of mode setting information in each of the K directions, determining that different coding modes are used for the to-be-decoded point in the K directions, and determining a coding mode of the to-be-decoded point in each direction based on the mode setting information of the to-be-decoded point in each direction.

4. The method according to claim 3, wherein the mode setting information comprises either or both of a residual division flag field and a number-of-occupied-bits division flag field;
   wherein the determining a coding mode common to the to-be-decoded point in the K directions based on the mode setting information common to the to-be-decoded point in the K directions comprises any one of:

   when the mode setting information comprises the residual division flag field, and a value of the residual division flag field is a target value, determining that the coding mode common to the to-be-decoded point in the K directions is a first coding mode;
   when the mode setting information comprises the number-of-occupied-bits division flag field, and a value of the number-of-occupied-bits division flag field is the target value, determining that the coding mode common to the to-be-decoded point in the K directions is a second coding mode; or
   when the mode setting information comprises the residual division flag field and the number-of-occupied-bits division flag field, and values of the residual division flag field and the number-of-occupied-bits division flag field are both the target value, determining that the coding mode common to the to-be-decoded point in the K directions is a third coding mode.

5. The method according to claim 1, wherein the coding data comprises a decision threshold, the decision threshold is set by default by a decoder side and a coder side, or the decision threshold is parsed out from a coded bitstream of the point cloud;

wherein the determining coding modes of a to-be-decoded point in the point cloud in K directions based on the coding data comprises:

parsing out mode decision information from the coded bitstream of the point cloud; and
deciding the coding modes of the to-be-decoded point in the K directions based on the mode decision information and the decision threshold.

6. The method according to claim 5, wherein the decision threshold comprises a quantization threshold,

wherein the mode decision information comprises a quantization parameter common to the to-be-decoded point in the K directions, and a same coding mode is used for the to-be-decoded point in the K directions;
wherein the deciding the coding modes of the to-be-decoded point in the K directions based on the mode decision information and the decision threshold comprises:
determining a coding mode common to the to-be-decoded point in the K directions based on a magnitude relationship between the quantization parameter and the quantization threshold.

7. The method according to claim 6, wherein the quantization threshold comprises either or both of a first quantization threshold and a second quantization threshold;
wherein the determining a coding mode common to the to-be-decoded point in the K directions based on a magnitude relationship between the quantization parameter and the quantization threshold comprises any one of:

when the quantization threshold comprises the first quantization threshold, if the quantization parameter is less than the first quantization threshold, determining that the coding mode common to the to-be-decoded point in the K directions is any one of a first coding mode, a second coding mode, or a third coding mode;
when the quantization threshold comprises the second quantization threshold, if the quantization parameter is greater than the second quantization threshold, determining that the coding mode common to the to-be-decoded point in the K directions is any one of the first coding mode, the second coding mode, or the third coding mode; or
when the quantization threshold comprises the first quantization threshold and the second quantization threshold, if the quantization parameter is greater than the second quantization threshold and is less than the first quantization threshold, determining that the coding mode common to the to-be-decoded point in the K directions is any one of the first coding mode, the second coding mode, or the third coding mode.

8. The method according to claim 5, wherein the decision threshold comprises a coding parsing threshold,
wherein the mode decision information comprises coding parsing information of the to-be-decoded point in the K directions, and the coding parsing information comprises residual parsing information or number-of-occupied-bits parsing information; and the deciding the coding modes of the to-be-decoded point in the K directions based on the mode decision information and the decision threshold comprises:

when a same coding mode is used for the to-be-decoded point in the K directions, determining statistical characteristic information of the coding parsing information of the to-be-decoded point in the K directions, and determining a coding mode common to the to-be-decoded point in the K directions based on a magnitude relationship between the statistical characteristic information and the coding parsing threshold; or
when different coding modes are used for the to-be-decoded point in the K directions, determining a coding mode of the to-be-decoded point in each direction based on a magnitude relationship between the coding parsing threshold and coding parsing information of the to-be-decoded point in each direction;
the statistical characteristic information comprising any one of an average value of the coding parsing information of the to-be-decoded point in the K directions, a minimum value of the coding parsing information of the to-be-decoded point in the K directions, and a maximum value of the coding parsing information of the to-be-decoded point in the K directions.

9. The method according to claim 5, wherein the decision threshold comprises a bounding box threshold, the mode decision information comprises a bounding box size of a prediction tree of the point cloud, and the bounding box size comprises sizes in the K directions;

wherein the deciding the coding modes of the to-be-decoded point in the K directions based on the mode decision information and the decision threshold comprises:

when a same coding mode is used for the to-be-decoded point in the K directions, determining a target size feature value based on the sizes in the K directions, and determining a coding mode common to the to-be-decoded point in the K directions based on a magnitude relationship between the target size feature value and the bounding box threshold; or

when different coding modes are used for the to-be-decoded point in the K directions, determining a size feature value of each of the K directions based on the sizes in the K directions, and determining a coding mode of the to-be-decoded point in each direction based on a magnitude relationship between the bounding box threshold and the size feature value of each direction.

10. The method according to clam 1, wherein the decoding the to-be-decoded point based on the determined coding modes comprises:

performing residual value decoding for the to-be-decoded point in each of the K directions based on the determined coding modes, to obtain reconstructed residual values of the to-be-decoded point in the K directions.

11. The method according to claim 10, wherein for a $k^{th}$ direction of the K directions, a coding mode of the to-be-decoded point in the $k^{th}$ direction is a first coding mode, k being a positive integer less than or equal to K;

wherein the performing residual value decoding for the to-be-decoded point based on the determined coding modes, to obtain reconstructed residual values of the to-be-decoded point in the K directions comprises:

parsing a number-of-occupied-bits field of the to-be-decoded point in the $k^{th}$ direction, to obtain a number B[k] of occupied bits of a residual quotient A1[k] of the to-be-decoded point in the $k^{th}$ direction;

parsing B[k] bit values in a bit value field of the to-be-decoded point in the $k^{th}$ direction, to obtain the residual quotient A1[k];

parsing a residual remainder field of the to-be-decoded point in the $k^{th}$ direction, to obtain a residual remainder A2 [k] of the to-be-decoded point in the $k^{th}$ direction; and

determining a reconstructed residual value A[k] of the to-be-decoded point in the $k^{th}$ direction based on the residual quotient A1[k] and the residual remainder A2[k].

12. The method according to claim 10, wherein for a $k^{th}$ direction of the K directions, a coding mode of the to-be-decoded point in the $k^{th}$ direction is a second coding mode, k being a positive integer less than or equal to K;

wherein the performing residual value decoding for the to-be-decoded point based on the determined coding modes, to obtain reconstructed residual values of the to-be-decoded point in the K directions comprises:

parsing a number-of-occupied-bits field of the to-be-decoded point in the $k^{th}$ direction, to obtain a number-of-occupied-bits quotient B1[k] of the to-be-decoded point in the $k^{th}$ direction;

parsing a number-of-occupied-bits remainder field of the to-be-decoded point in the $k^{th}$ direction, to obtain a number-of-occupied-bits remainder B2[k] of the to-be-decoded point in the $k^{th}$ direction;

determining a number B[k] of occupied bits of a reconstructed residual value A[k] of the to-be-decoded point in the $k^{th}$ direction based on the number-of-occupied-bits quotient B1[k] and the number-of-occupied-bits remainder B2 [k]; and

parsing B[k] bit values in a bit value field of the to-be-decoded point in the $k^{th}$ direction, to obtain the reconstructed residual value A[k] of the to-be-decoded point in the $k^{th}$ direction.

13. The method according to claim 10, wherein for a $k^{th}$ direction of the K directions, a coding mode of the to-be-decoded point in the $k^{th}$ direction is a third coding mode, k being a positive integer less than or equal to K;

wherein the performing residual value decoding for the to-be-decoded point based on the determined coding modes, to obtain reconstructed residual values of the to-be-decoded point in the K directions comprises:

parsing a number-of-occupied-bits field of the to-be-decoded point in the $k^{th}$ direction, to obtain a number-of-occupied-bits quotient B1[k] of the to-be-decoded point in the $k^{th}$ direction;

parsing a number-of-occupied-bits remainder field of the to-be-decoded point in the $k^{th}$ direction, to obtain a number-of-occupied-bits remainder B2[k] of the to-be-decoded point in the $k^{th}$ direction;

determining a number B[k] of occupied bits of a residual quotient A1[k] of the to-be-decoded point in the $k^{th}$

direction based on the number-of-occupied-bits quotient B1[k] and the number-of-occupied-bits remainder B2[k];

parsing B[k] bit values in a bit value field of the to-be-decoded point in the $k^{th}$ direction, to obtain the residual quotient A1[k];

parsing a residual remainder field of the to-be-decoded point in the $k^{th}$ direction, to obtain a residual remainder A2[k] of the to-be-decoded point in the $k^{th}$ direction; and

determining a reconstructed residual value A[k] of the to-be-decoded point in the $k^{th}$ direction based on the residual quotient A1[k] and the residual remainder A2[k].

14. The method according to claim 11 or 13, wherein when the coding modes of the to-be-decoded point in the K directions are the first coding mode or the third coding mode, residual remainder fields of the to-be-decoded point in the K directions are parsed by using K4 context models, K4 being a positive integer less than or equal to K.

15. The method according to claim 12 or 13, wherein when the coding modes of the to-be-decoded point in the K directions are the second coding mode or the third coding mode, number-of-occupied-bits remainder fields of the to-be-decoded point in the K directions are parsed by using K5 context models, K5 being a positive integer less than or equal to K.

16. The method according to any one of claims 11 to 13, wherein the parsing B[k] bit values in a bit value field of the to-be-decoded point in the $k^{th}$ direction comprises:

parsing the B[k] bit values by using N context models, B[k] being a positive integer and N being a positive integer greater than or equal to B[k].

17. The method according to claim 16, wherein the parsing the B[k] bit values by using N context models comprises:

parsing the B[k] bit values by using N independent context models, N being equal to B[k];

a context model used to parse each of the B[k] bit values being independently selected from the N context models.

18. The method according to claim 16, wherein the parsing the B[k] bit values by using N context models comprises:

parsing the B[k] bit values by using N fully-correlated context models, N being greater than B[k];

a context model used to parse an $a^{th}$ bit value of the B[k] bit values being selected from the N context models depending on parsing results of a-1 bit values before the $a^{th}$ bit value, a being a positive integer less than or equal to B[k].

19. The method according to claim 16, wherein the parsing the B[k] bit values by using N context models comprises:

parsing the B[k] bit values by using N partially-correlated context models, N being greater than B[k];

a context model used to parse an $(a1)^{th}$ bit value of the B[k] bit values being selected from the N context models depending on a parsing result of a value before the $(a1)^{th}$ bit value, and a context model used to parse an $(a2)^{th}$ bit value of the B[k] bit values being independently selected from the N context models, both a1 and a2 being positive integers less than or equal to B[k], and a1 being not equal to a2.

20. The method according to claim 1, wherein reconstructed residual values of the to-be-decoded point in the K directions are obtained after the to-be-decoded point is decoded based on the determined coding modes;

wherein the method further comprises:

performing residual sign decoding for the to-be-decoded point in each of the K directions, to obtain reconstructed residual sign information of the to-be-decoded point in the K directions;

determining reconstructed residual information of the to-be-decoded point based on the reconstructed residual values of the to-be-decoded point in the K directions and the reconstructed residual sign information of the to-be-decoded point in the K directions; and

reconstructing geometry information of the to-be-decoded point based on the reconstructed residual information of the to-be-decoded point.

21. The method according to claim 20, wherein the performing residual sign decoding for the to-be-decoded point in each of the K directions, to obtain reconstructed residual sign information of the to-be-decoded point in the K directions comprises:

reading residual sign coding of the to-be-decoded point in the K directions from a coded bitstream of the point cloud; and

parsing the residual sign coding of the to-be-decoded point in the K directions, to obtain the reconstructed residual sign information of the to-be-decoded point in the K directions.

22. The method according to claim 20, wherein the performing residual sign decoding for the to-be-decoded point in each of the K directions, to obtain reconstructed residual sign information of the to-be-decoded point in the K directions comprises:

obtaining sign indication information, the sign indication information being set by default by a coder side and a decoder side, or the sign indication information being parsed out from a coding parameter set or a coded bitstream of the point cloud;

determining a sign association relationship between the to-be-decoded point and a previous point of the to-be-decoded point based on a value of the sign indication information; and

in response to that there is a sign association relationship between the to-be-decoded point and the previous point of the to-be-decoded point, determining the reconstructed residual sign information of the to-be-decoded point in the K directions based on reconstructed residual sign information of the previous point of the to-be-decoded point in the K directions; or

in response to that there is no sign association relationship between the to-be-decoded point and the previous point of the to-be-decoded point, reading residual sign coding of the to-be-decoded point in the K directions from a coded bitstream of the point cloud, and parsing the residual sign coding of the to-be-decoded point in the K directions, to obtain the reconstructed residual sign information of the to-be-decoded point in the K directions.

23. The method according to claim 21 or 22, wherein the parsing the residual sign coding of the to-be-decoded point in the K directions, to obtain the reconstructed residual sign information of the to-be-decoded point in the K directions comprises:

parsing the residual sign coding of the to-be-decoded point in the K directions by using K2 context models, to obtain the reconstructed residual sign information of the to-be-decoded point in the K directions, K2 being a positive integer less than or equal to K.

24. The method according to claim 20, wherein the reconstructing geometry information of the to-be-decoded point based on the reconstructed residual information of the to-be-decoded point comprises:

obtaining predicted geometry information of the to-be-decoded point; and

reconstructing the geometry information of the to-be-decoded point based on the reconstructed residual information of the to-be-decoded point and the predicted geometry information of the to-be-decoded point.

25. A point cloud processing method, performed by a coding device, the method comprising:

setting coding data of a point cloud;

determining coding modes of a to-be-coded point in the point cloud in K directions based on the coding data, K being a positive integer; and

coding the to-be-coded point based on the determined coding modes.

26. The method according to claim 25, further comprising:

obtaining geometric residual information of the to-be-coded point, the geometric residual information comprising residual values of the to-be-coded point in the K directions and residual sign information of the to-be-coded point in the K directions; and

the coding the to-be-coded point based on the determined coding modes comprises:

coding the residual values of the to-be-coded point in the K directions based on the determined coding modes.

27. The method according to claim 26, wherein for a $k^{th}$ direction of the K directions, a coding mode of the to-be-coded point in the $k^{th}$ direction is a first coding mode, k being a positive integer less than or equal to K;

wherein the coding the residual values of the to-be-coded point in the K directions based on the determined coding modes comprises:

performing remainder calculation on a residual value A[k] of the to-be-coded point in the $k^{th}$ direction, to obtain a residual quotient A1[k] and a residual remainder A2[k];

determining a number B[k] of occupied bits of the residual quotient A1[k], representing the number B[k] of occupied bits by using a number-of-occupied-bits field of the to-be-coded point in the k$^{th}$ direction, and coding the number-of-occupied-bits field;

representing the residual remainder A2[k] by using a residual remainder field of the to-be-coded point in the k$^{th}$ direction, and coding the residual remainder field; and

representing, by using B[k] bit elements in a bit value field of the to-be-coded point in the k$^{th}$ direction, a value of each of the B[k] bits occupied by the residual quotient A1[k], and coding the B[k] bit elements in the bit value field.

28. The method according to claim 26, wherein for a k$^{th}$ direction of the K directions, a coding mode of the to-be-coded point in the k$^{th}$ direction is a second coding mode, k being a positive integer less than or equal to K;
wherein the coding the residual values of the to-be-coded point in the K directions based on the determined coding modes comprises:

determining a number B[k] of occupied bits of a residual value A[k] of the to-be-coded point in the k$^{th}$ direction;
performing remainder calculation on the number B[k] of occupied bits, to obtain a number-of-occupied-bits quotient B1[k] and a number-of-occupied-bits remainder B2[k];
representing the number-of-occupied-bits quotient B1[k] by using a number-of-occupied-bits field of the to-be-coded point in the k$^{th}$ direction, and coding the number-of-occupied-bits field;
representing the number-of-occupied-bits remainder B2[k] by using a number-of-occupied-bits remainder field of the to-be-coded point in the k$^{th}$ direction, and coding the number-of-occupied-bits remainder field; and
representing, by using B[k] bit elements in a bit value field of the to-be-coded point in the k$^{th}$ direction, a value of each of the B[k] bits occupied by the residual value of the to-be-coded point in the k$^{th}$ direction, and coding the B[k] bit elements in the bit value field.

29. The method according to claim 26, wherein for a k$^{th}$ direction of the K directions, a coding mode of the to-be-coded point in the k$^{th}$ direction is a third coding mode, k being a positive integer less than or equal to K;
wherein the coding the residual values of the to-be-coded point in the K directions based on the determined coding modes comprises:

performing remainder calculation on a residual value A[k] of the to-be-coded point in the k$^{th}$ direction, to obtain a residual quotient A1[k] and a residual remainder A2[k];
representing the residual remainder A2[k] by using a residual remainder field of the to-be-coded point in the k$^{th}$ direction, and coding the residual remainder field; and
performing remainder calculation on a number B[k] of occupied bits of the residual quotient A1[k], to obtain a number-of-occupied-bits quotient B1[k] and a number-of-occupied-bits remainder B2[k];
representing the number-of-occupied-bits quotient B1[k] by using a number-of-occupied-bits field of the to-be-coded point in the k$^{th}$ direction, and coding the number-of-occupied-bits field;
representing the number-of-occupied-bits remainder B2[k] by using a number-of-occupied-bits remainder field of the to-be-coded point in the k$^{th}$ direction, and coding the number-of-occupied-bits remainder field; and
representing, by using B[k] bit elements in a bit value field of the to-be-coded point in the k$^{th}$ direction, a value of each of the B[k] bits occupied by the residual quotient A1[k], and coding the B[k] bit elements in the bit value field.

30. The method according to claim 25, further comprising:
performing residual sign coding for the to-be-coded point in the K directions.

31. The method according to claim 30, wherein the performing residual sign coding for the to-be-coded point in the K directions comprises:

setting sign indication information, the sign indication information being set by default by a coder side and a decoder side, or the sign indication information being written in a coding parameter set or a coded bitstream of the point cloud;
determining a sign association relationship between the to-be-coded point and a previous point of the to-be-coded point based on a set value of the sign indication information; and
in response to that there is a sign association relationship between the to-be-coded point and the previous point of the to-be-coded point, determining the residual sign coding of the to-be-coded point in the K directions based on residual sign coding of the previous point of the to-be-coded point in the K directions; or
in response to that there is no sign association relationship between the to-be-coded point and the previous point of the to-be-coded point, coding residual sign information of the to-be-coded point in the K directions.

**32.** A point cloud processing apparatus, comprising:

an obtaining unit, configured to obtain coding data of a point cloud; and
a processing unit, configured to determine coding modes of a to-be-decoded point in the point cloud in K directions based on the coding data, K being a positive integer; and decode the to-be-decoded point based on the determined coding modes.

**33.** A point cloud processing apparatus, comprising:

a setting unit, configured to set coding data of a point cloud; and
a processing unit, configured to determine coding modes of a to-be-coded point in the point cloud in K directions based on the coding data, K being a positive integer; and code the to-be-coded point based on the determined coding modes.

**34.** A computer device, comprising:

a processor, configured to implement a computer program; and
a computer-readable storage medium, having the computer program stored therein, the computer program being loaded and executed by the processor to implement the point cloud processing method according to any one of claims 1 to 24 or the point cloud processing method according to any one of claims 25 to 31.

**35.** A computer-readable storage medium, having a computer program stored therein, the computer program being loaded and executed by a processor to implement the point cloud processing method according to any one of claims 1 to 24 or the point cloud processing method according to any one of claims 25 to 31.

Geometry information          Attribute information

Coordinate transform          Color transform

Voxelization          Attribute transform

Geometry coding          Geometry reconstruction          Attribute coding

Geometry quantization          Attribute quantization

Geometry entropy coding          Attribute entropy coding

Geometry bitstream          Attribute bitstream

FIG. 1

Bounding box

Point cloud

FIG. 2

FIG. 3

FIG. 4

FIG. 5

FIG. 6

Obtain coding data of a point cloud — S601

Determine coding modes of a to-be-decoded point in the point cloud in K directions based on the coding data — S602

Decode the to-be-decoded point based on the determined coding modes — S603

FIG. 7

Set coding data of a point cloud — S701

Determine coding modes of a to-be-coded point in the point cloud in K directions based on the coding data — S702

Code the to-be-coded point based on the determined coding modes — S703

FIG. 8

FIG. 9

FIG. 10

1001                    1002

| Setting unit | — | Processing unit |

Point cloud processing apparatus

FIG. 11

1104              1101              1102

Program
instruction 1

Program
instruction 2

⋮

Program
instruction n

Processor

Input interface

1103

Output
interface

Computer-readable
storage medium

Computer device

FIG. 12

<table>
<tr><td colspan="2" align="center">**INTERNATIONAL SEARCH REPORT**</td><td>International application No.<br>**PCT/CN2023/079140**</td></tr>
</table>

**A. CLASSIFICATION OF SUBJECT MATTER**

G06T 9/00(2006.01)i

According to International Patent Classification (IPC) or to both national classification and IPC

**B. FIELDS SEARCHED**

Minimum documentation searched (classification system followed by classification symbols)

IPC: G06T, H04N

Documentation searched other than minimum documentation to the extent that such documents are included in the fields searched

Electronic data base consulted during the international search (name of data base and, where practicable, search terms used)

DWPI, ENTXT, CNTXT, CNKI: 点云, 编码, 解码, 模式, 方向, 坐标, 残差, point w cloud, encode, decode, mode, direction, coordinate, residual

**C. DOCUMENTS CONSIDERED TO BE RELEVANT**

| Category* | Citation of document, with indication, where appropriate, of the relevant passages | Relevant to claim No. |
|---|---|---|
| PX | CN 115131449 A (TENCENT TECHNOLOGY (SHENZHEN) CO., LTD.) 30 September 2022 (2022-09-30)<br>claims 1-35 | 1-35 |
| X | CN 111699697 A (SZ DJI TECHNOLOGY CO., LTD.) 22 September 2020 (2020-09-22)<br>description, paragraphs [0061]-[0120] | 1-7, 10, 25-26, 30, 32-35 |
| A | CN 112565734 A (XIDIAN UNIVERSITY) 26 March 2021 (2021-03-26)<br>entire document | 1-35 |
| A | US 2022108484 A1 (QUALCOMM INC.) 07 April 2022 (2022-04-07)<br>entire document | 1-35 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 May 2023** | **18 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/079140**

| Patent document cited in search report | | | Publication date (day/month/year) | Patent family member(s) | | | Publication date (day/month/year) |
|---|---|---|---|---|---|---|---|
| CN | 115131449 | A | 30 September 2022 | None | | | |
| CN | 111699697 | A | 22 September 2020 | WO | 2020248562 | A1 | 17 December 2020 |
| | | | | WO | 2021109153 | A1 | 10 June 2021 |
| | | | | US | 2022108494 | A1 | 07 April 2022 |
| CN | 112565734 | A | 26 March 2021 | None | | | |
| US | 2022108484 | A1 | 07 April 2022 | TW | 202220442 | A | 16 May 2022 |
| | | | | WO | 2022076198 | A1 | 14 April 2022 |
| | | | | US | 2022108491 | A1 | 07 April 2022 |
| | | | | TW | 202222075 | A | 01 June 2022 |
| | | | | WO | 2022076197 | A1 | 14 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210717592